# EUROPEAN PATENT APPLICATION

(11) **EP 4 787 912 A1**
(43) Date of publication of application: **05.08.2026**
(21) Application number: 24880165.6
(22) Date of filing: 18.10.2024
(51) Int. Cl.: H04W 8/02, H04W 48/16, H04W 36/08, H04W 36/00, H04W 84/12, H04W 8/08, H04W 36/14

(54) **METHOD AND DEVICE FOR UPDATING PARAMETER IN ROAMING PROCEDURE OF WIRELESS LAN**

(30) Priority: 20.10.2023 KR 20230141502; 18.01.2024 KR 20240007996
(71) Applicant: Hyundai Motor Company, Seoul 06797 (KR); Kia Corporation, Seoul 06797 (KR); KOREA NATIONAL UNIVERSITY OF TRANSPORTATION INDUSTRY-ACADEMIC COOPERATION FOUNDATION, Chungju-si, Chungcheongbuk-do 27469 (KR)
(72) Inventor: KIM, Yong Ho, Incheon 21562 (KR); MOON, Ju Seong, Osan-si, Gyeonggi-do 18101 (KR)
(74) Representative: Isarpatent
(86) International application number: PCT/KR2024/015835
(87) International publication number: WO 2025/084828

(57) **Abstract**

A method and apparatus for updating a parameter in a roaming procedure of a WLAN is disclosed. A method of a first AP includes transmitting a distributed system (DS) mapping request frame to a first DS to which the first AP belongs for a roaming procedure for a STA and receiving a DS mapping response frame indicating completion of a DS mapping procedure from the first DS, wherein when the DS mapping procedure is completed, a DS to which the STA is mapped is changed from the first DS to a second DS to which a second AP belongs, the first AP is a serving AP, and the second AP is a target AP.

## Description

### Field of the Invention

The present disclosure relates to a communication technology in a wireless local area network (WLAN), and particularly, to a technology of updating a parameter in a roaming procedure.

### Discussion of Related Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

Standards using wireless LAN technology are primarily being developed as IEEE 802.11 standards by the Institute of Electrical and Electronics Engineers (IEEE). As the aforementioned WLAN technology has been developed and popularized, applications using WLAN technology have diversified, and the demand for WLAN technology supporting high throughput and/or high reliability has emerged.

With the emergence of applications requiring high throughput and/or real-time transmission, WLANs may support communication using expanded frequency bandwidth and efficient retransmission operations. Furthermore, WLANs may support operations in which multiple channels or multiple links are used simultaneously. The IEEE 802.11bn standard that is an ultra high reliability (UHR) WLAN technology is being developed in single basic service set (BSS) and/or overlapped basic service set (OBSS) environments. The IEEE 802.11bn standard may be intended to improve data transmission rates, enhance latency performance, and/or reduce data error rates. The IEEE 802.11bn standard may support low-power operation and peer-to-peer (P2P) communication.

In a WLAN, multiple Access Points (APs) may be present, and a station (STA) may move between the APs. An STA may perform a roaming procedure whenever it moves between APs. During the roaming procedure, modification of parameters (e.g., updates) may be required. When the modification of parameters is delayed during the roaming procedure, communication efficiency may decrease and communication latency may increase. In other words, the reliability of the WLAN may not be satisfied.

### Disclosure

### Technical Problem

In order to solve the above-described problem, an object of the present disclosure is to provide a method and apparatus for updating a parameter in a roaming procedure in a WLAN.

### Technical Solution

A method of a first access point (AP) according to embodiments of the present disclosure for achieving the above-described object includes transmitting a distributed system (DS) mapping request frame to a first DS to which the first AP belongs for a roaming procedure for a station (STA) and receiving a DS mapping response frame indicating completion of a DS mapping procedure from the first DS, wherein when the DS mapping procedure is completed, a DS to which the STA is mapped is changed from the first DS to a second DS to which a second AP belongs, the first AP is a serving AP, and the second AP is a target AP.

When the DS mapping procedure is completed, a transmission path of a packet for the STA may be changed from a path from the STA to the first AP to the first DS to a path from the STA to the second AP to the second DS.

The method of the first AP may further transmitting information indicating completion of the DS mapping procedure to the second AP.

The DS mapping procedure may be performed when the first DS to which the first AP belongs is different from the second DS to which the second AP belongs.

The DS request frame may include at least one of information on the second AP, information on the second DS, or information on the STA.

The DS mapping request frame may be an address resolution protocol (ARP) request frame, and the DS mapping response frame may be an ARP response frame.

The method of the first AP may further include receiving a roaming request frame from the STA connected to the first AP and transmitting a roaming response frame to the STA as a response to the roaming request frame.

The method of the first AP may further include performing a procedure of exchanging roaming information with the second AP when the roaming request frame is received.

The roaming response frame may include information indicating that the second AP accepts the roaming procedure.

The STA may be an STA affiliated with an STA multi-link device (MLD), the first AP may be an AP affiliated with a first AP MLD, and the second AP may be an AP affiliated with a second AP MLD.

A method of a second access point (AP) according to embodiments of the present disclosure for achieving the above-described object includes transmitting a distributed system (DS) mapping request frame to a second DS to which the second AP belongs for a roaming procedure for a station (STA) and receiving a DS mapping response frame indicating completion of a DS mapping procedure from the second DS, wherein when the DS mapping procedure is completed, a DS to which the STA is mapped is changed from a first DS to which a first AP belongs to the second DS, the first AP is a serving AP, and the second AP is a target AP.

When the DS mapping procedure is completed, a transmission path of a packet for the STA may be changed from a path from the STA to the first AP to the first DS to a path from the STA to the second AP to the second DS.

The method of the second AP may further transmitting information indicating completion of the DS mapping procedure to the first AP.

The DS mapping procedure may be performed when the first DS to which the first AP belongs is different from the second DS to which the second AP belongs.

The DS request frame may include at least one of information on the first AP, information on the first DS, or information on the STA.

The DS mapping request frame may be an address resolution protocol (ARP) request frame, and the DS mapping response frame may be an ARP response frame.

The method of the second AP may further include performing a procedure of exchanging roaming information with the first AP when the STA requests initiation of the roaming procedure.

The method of the second AP may further include performing an association procedure between the second AP and the STA when the second AP accepts the roaming procedure of the STA.

The performing of the association procedure between the second AP and the STA may include receiving a setup request frame from the STA and transmitting a setup response frame to the STA as a response to the setup request frame.

The STA may be an STA affiliated with a STA multi-link device (MLD), the first AP may be an AP affiliated with a first AP MLD, and the second AP may be an AP affiliated with a second AP MLD.

### Advantageous Effects

According to the present disclosure, an STA may move between APs. In other words, an STA may perform a roaming procedure. Before performing a roaming procedure, an STA may transmit information on a time at which a roaming procedure is performed, information on a target AP and/or information on a current Internet protocol (IP) address to APs (e.g., a current AP and/or a target AP). APs may support an update operation for parameters (e.g., association information, an IP address, etc.) of an STA based on information received from the STA. In other words, an STA may quickly update parameters in a roaming procedure based on support of APs. Accordingly, a roaming procedure may be quickly performed in a WLAN, and transmission efficiency may be enhanced in the WLAN.

### Description of Drawings

FIG. 1 is a block diagram illustrating a first embodiment of a communication node constituting a WLAN system.
FIG. 2 is a conceptual diagram illustrating a first embodiment of multiple links configured between MLDs.
FIG. 3 is a timing diagram illustrating parameter exchange methods in a roaming procedure.
FIG. 4 is a timing diagram illustrating parameter exchange methods in a roaming procedure.
FIG. 5 is a timing diagram illustrating ARP methods in a roaming procedure.
FIG. 6 is a timing diagram illustrating ARP methods in a roaming procedure.
FIG. 7 is a timing diagram illustrating ARP methods in a roaming procedure.
FIG. 8 is a timing diagram illustrating ARP methods in a roaming procedure.

### Mode for Invention

The present disclosure may have various modifications and embodiments, and specific embodiments are illustrated in the drawings and described in detail in the detailed description. However, this is not intended to limit the present disclosure to specific embodiments, but should be understood to include all modifications, equivalents, or substitutes included in the spirit and technical scope of the present disclosure.

The terms first, second, etc. may be used to describe various components, but the components should not be limited by the terms. The terms are only used for the purpose of distinguishing one component from another. For example, without departing from the scope of the present disclosure, the first component may be referred to as the second component, and similarly, the second component may also be referred to as the first component. The term and/or includes a combination of a plurality of related described items or any item among a plurality of related described items.

In embodiments of the present disclosure, "at least one of A and B" may mean "at least one of A or B" or "at least one of one or more combinations of A and B." Also, in embodiments of the present disclosure, "one or more of A and B" may mean "one or more of A or B" or "one or more of one or more combinations of A and B."

When it is said that a component is 'coupled with/to' or 'connected to' another component, it should be understood that the one component is connected to the other component directly or through any other component in between. On the other hand, when it is said that a component is 'directly connected to' or 'directly coupled to' another component, it should be understood that there is no other component between the components.

The terminology used in the present disclosure is only used to describe specific embodiments and is not intended to limit the present disclosure. The singular expression includes the plural expression unless the context clearly indicates otherwise. In the present disclosure, terms such as "include" or "have" are intended to specify the presence of a feature, number, step, operation, component, part or combination thereof described in the specification, but should be understood not to exclude in advance the possibility of the presence or addition of one or more other features, numbers, steps, operations, components, parts or combinations thereof.

Unless otherwise defined, all terms used herein, including technical or scientific terms, have the same meaning as commonly understood by one of ordinary skill in the art to which this disclosure pertains. Terms defined in commonly used dictionaries should be interpreted as having a meaning consistent with their meaning in the context of the relevant technology, and will not be interpreted in an idealized or overly formal sense unless explicitly defined herein.

Hereinafter, with reference to the attached drawings, preferred embodiments of the present disclosure will be described in more detail. In order to facilitate an overall understanding in describing the present disclosure, identical reference numerals are used for identical components in the drawings, and redundant descriptions of identical components are omitted.

Below, a wireless communication system to which embodiments of the present disclosure are applied will be described. The wireless communication system to which embodiments of the present disclosure are applied is not limited to the description below, and embodiments of the present disclosure can be applied to various wireless communication systems. The wireless communication system may be referred to as a "wireless communication network."

In an embodiment, "an operation (e.g., a transmission operation) being configured" may mean that "configuration information (e.g., an information element, a parameter) for the operation" and/or "information indicating performance of the operation" are signaled. "An information element (e.g., a parameter) being configured" may mean that the corresponding information element is signaled. "A resource (e.g., a resource region) being configured" may mean that configuration information of the resource is signaled. Names of frames proposed in the present disclosure may be generalized like a first frame, a second frame, a third frame, and the like. A transmission time point of a frame may mean a transmission start time point or a transmission end time point, and a reception time point of a frame may mean a reception start time point or a reception end time point. A transmission time point may be interpreted as corresponding to a reception time point. A time point may be interpreted as time, and time may be interpreted as a time point.

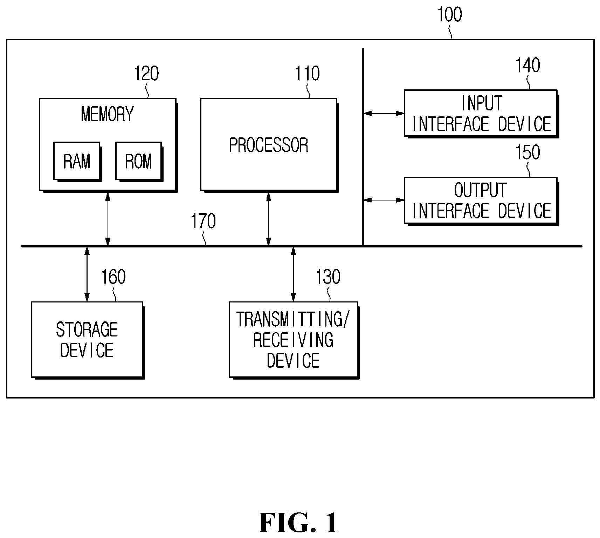

FIG. 1 illustrates a block diagram of a communication node in a WLAN system.

Referring to FIG. 1, a communication node 100 may be an access point (AP), a station (STA), an AP multi-link device (MLD), or a non-AP MLD. A STA may be a non-AP STA. An operating channel width supported by an AP may be 20 MHz, 80 MHz, or 160 MHz. An operating channel width supported by a STA may be 20 MHz or 80 MHz.

The communication node 100 may include at least one processor 110, a memory 120, and at least one transmitting/receiving device 130 that is connected to a network and performs communication. The transmitting/receiving device 130 may also be referred to as a transceiver, a radio frequency (RF) unit, or a RF module. In addition, the communication node 100 may further include an input interface device 140, an output interface device 150, and a storage device 160. Components included in the communication node 100 may be connected by a bus 170 and perform communication between them.

However, each component included in the communication node 100 may be connected not by the common bus 170 but by an individual interface or individual bus around the processor 110. For example, the processor 110 may be connected to at least one of the memory 120, the transmitting/receiving device 130, the input interface device 140, the output interface device 150, and the storage device 160 through a dedicated interface.

The processor 110 may execute a program command stored in at least one of the memory 120 and the storage device 160. The processor 110 may be a central processing unit (CPU), a graphics processing unit (GPU), or a dedicated processor that performs methods according to the embodiments of the present disclosure. The memory 120 and the storage device 160 may each be formed as at least one of a volatile storage medium and a non-volatile storage medium. For example, the memory 120 may be formed as at least one of a read only memory (ROM) and a random access memory (RAM).

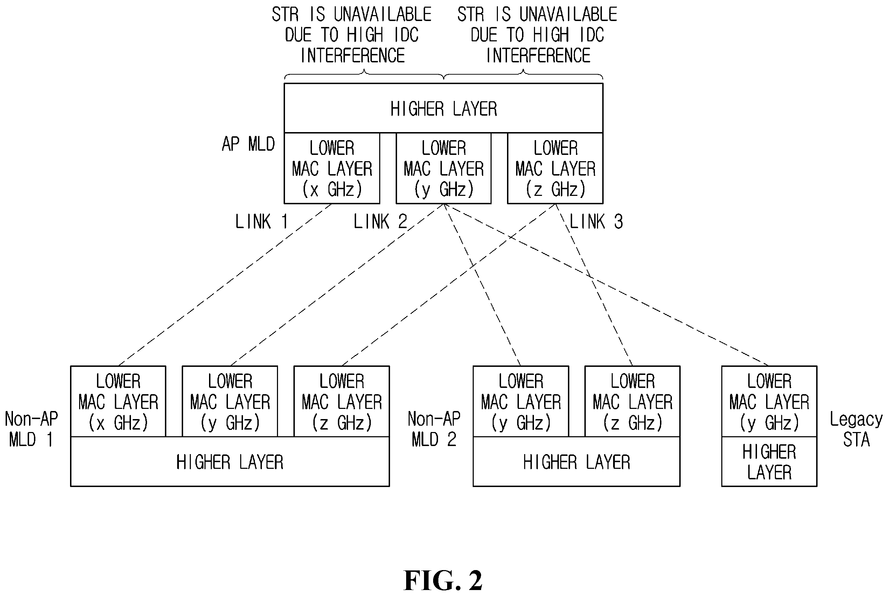

FIG. 2 is a conceptual diagram illustrating a first embodiment of multiple links configured between MLDs.

Referring to FIG. 2, an MLD may have one medium access control (MAC) address. In embodiments, an MLD may be an AP MLD and/or a non-AP MLD. The MAC address of an MLD may be used in a multi-link setup procedure between a non-AP MLD and an AP MLD. The MAC address of an AP MLD may be different from the MAC address of a non-AP MLD. An AP(s) affiliated with an AP MLD may have a different MAC address, and an STA(s) affiliated with a non-AP MLD may have a different MAC address. APs within an AP MLD having different MAC addresses may be responsible for each link and serve as independent APs.

STAs within non- AP MLDs having different MAC addresses may be responsible for each link and serve as independent STAs. A non-AP MLD may be referred to as an STA MLD. An MLD may support a simultaneous transmit and receive (STR) operation. For example, the MLD may perform a transmitting operation on Link 1 and a receiving operation on Link 2. An MLD supporting an STR operation may be referred to as an STR MLD (e.g., an STR AP MLD or an STR non-AP MLD). In embodiments, a link may be a channel or a band. A device not supporting an STR operation may be referred to as a non-STR (NSTR) AP MLD or an NSTR non-AP MLD (or NSTR STA MLD).

An MLD may transmit and receive frames on multiple links using a non-contiguous bandwidth extension scheme (e.g., 80 MHz+80 MHz). A multi-link operation may include multi-band transmission. An AP MLD may include a plurality of APs, and the plurality of APs may operate on different links. Each of the plurality of APs may perform a function of a lower MAC layer. Each of the plurality of APs may be referred to as "a communication node" or "a lower entity". A communication node (e.g., an AP) may operate according to the control of an upper layer (or the processor 110 illustrated in FIG. 1). A non-AP MLD may include a plurality of STAs, and the plurality of STAs may operate on different links. Each of the plurality of STAs may be referred to as "a communication node" or "a lower entity". A communication node (e.g., an STA) may operate according to the control of an upper layer (or the processor 110 illustrated in FIG. 1).

An MLD may perform communication over multiple bands. For example, an MLD may perform communication using a bandwidth of 40 MHz in a band of 2.4 GHz according to a channel expansion scheme (e.g., a bandwidth expansion scheme) and perform communication using a bandwidth of 160 MHz in a band of 5 GHz according to the channel expansion scheme. An MLD may perform communication using the bandwidth of 160 MHz in the band of 5 GHz and perform communication using the bandwidth of 160 MHz in a band of 6 GHz. A single frequency band (e.g., a single channel) used by an MLD may be defined as a single link. Alternatively, a plurality of links may be set in a single frequency band used by an MLD. For example, an MLD may set one link in the band of 2.4 GHz and set two links in the band of 6 GHz. The links may be referred to as a first link, a second link, and a third link respectively. Alternatively, the links may be referred to as Link 1, Link 2, and Link 3 respectively. A link number may be set by an AP, and an identifier (ID) may be assigned to each link.

An MLD (e.g., an AP MLD and/or a non-AP MLD) may set multiple links by performing an access procedure and/or a negotiation procedure for a multi-link operation. For example, the number of links and/or a link to be used among multiple links may be set. A non-AP MLD (e.g., an STA) may identify information on a band in which communication with an AP MLD is possible. In a negotiation procedure for a multi-link operation between a non-AP MLD and an AP MLD, the non-AP MLD may set one or more links among links supported by the AP MLD to be used for the multi-link operation. An STA (e.g., an STA according to IEEE 802.11a/b/g/n/ac/ax) not supporting the multi-link operation may access one or more links among multiple links supported by an AP MLD.

When a band gap between multiple links (e.g., a band gap between Link 1 and Link 2 in the frequency domain) is sufficient, an MLD may perform an STR operation. For example, the MLD may transmit physical layer (PHY) protocol data (PPDU) 1 using Link 1 among the multiple links and receive PPDU 2 using Link 2 among the multiple links. On the other hand, when a band gap between multiple links is not sufficient and an MLD performs an STR operation, in-device coexistence (IDC) interference, that is, interference between multiple links may occur. Accordingly, when a band gap between multiple links is not sufficient, an MLD may not perform an STR operation. A pair of links in the above-described interference relationship may be an non-simultaneous transmit and receive (NSTR) limited link pair.. Here, an MLD may be an NSTR AP MLD or an NSTR non-AP MLD.

For example, multiple links including Link 1, Link 2, and Link 3 may be set between an AP MLD and a non-AP MLD 1. When a band gap between Link 1 and Link 3 is sufficient, the AP MLD may perform an STR operation using Link 1 and Link 3. In other words, the AP MLD may transmit a frame using Link 1 and receive a frame using Link 3. When a band gap between Link 1 and Link 2 is not sufficient, the AP MLD may not perform the STR operation using Link 1 and Link 2. When a band gap between Link 2 and Link 3 is not sufficient, the AP MLD may not perform the STR operation using Link 2 and Link 3.

Meanwhile, in a WLAN system, a negotiation procedure for a multi-link operation may be performed in an access procedure between an STA and an AP. A device supporting multiple links (e.g., an AP or an STA) may be referred to as a multi-link device (MLD). An AP supporting multiple links may be referred to as an AP MLD, and an STA supporting multiple links may be referred to as a non-AP MLD or an STA MLD. An AP MLD may have a physical address (e.g., an MAC address) for each link. An AP MLD may be implemented as if an AP responsible for each link exists separately. A plurality of APs may be managed in a single AP MLD. Accordingly, coordination may be possible among a plurality of APs that belong to the same AP MLD. An STA MLD may have a physical address (e.g., an MAC address) for each link. An STA MLD may be implemented as if an STA responsible for each link exists separately. A plurality of STAs may be managed in a single STA MLD. Accordingly, coordination may be possible among a plurality of STAs that belong to the same STA MLD.

For example, AP 1 of an AP MLD and STA 1 of an STA MLD may each be responsible for a first link and perform communication using the first link. AP 2 of the AP MLD and STA 2 of the STA MLD may each be responsible for a second link and perform communication using the second link. STA 2 may receive state change information for the first link on the second link. The STA MLD may collect information (e.g., state change information) received from each link and control an operation performed by STA 1 based on the collected information.

Next, methods for transmitting and receiving data in a wireless LAN system will be described. When a method (e.g., transmission or reception of a signal) performed in a first communication node among communication nodes is described, a second communication node corresponding to it may perform a method (e.g., reception or transmission of a signal) corresponding to the method performed in the first communication node. In other words, when an operation of an STA is described, an AP corresponding to it may perform an operation corresponding to the operation of the STA. On the other hand, when an operation of an AP is described, an STA corresponding to it may perform an operation corresponding to the operation of the AP.

In the present disclosure, an operation of an STA may be interpreted as an operation of an STA MLD, an operation of an STA MLD may be interpreted as an operation of an STA, an operation of an AP may be interpreted as an operation of an AP MLD, and an operation of an AP MLD may be interpreted as an operation of an AP. An STA of an STA MLD may mean an STA affiliated with the STA MLD, and an AP of an AP MLD may mean an AP affiliated with the AP MLD. When an STA MLD includes a first STA operating on a first link and a second STA operating on a second link, the operation of the STA MLD on the first link may be interpreted as the operation of a first STA, and the operation of the STA MLD on the second link may be interpreted as the operation of a second STA. When an AP MLD includes a first AP operating on a first link and a second AP operating on a second link, the operation of the AP MLD on the first link may be interpreted as the operation of a first AP, and the operation of the AP MLD on the second link may be interpreted as the operation of a second AP.

An embodiment of the present disclosure may be applied not only to multiple links but also to a single link. In other words, an embodiment described as being applied to multiple links may be applied to a single link in the same and/or a similar manner. An embodiment described as being applied to a single link may be applied to multiple links in the same and/or a similar manner. In the present disclosure, a communication method will be described in a situation in which a single STA MLD is connected with a plurality of AP MLDs. An embodiment of the present disclosure may be applied to a situation in which one STA is connected with a plurality of APs.

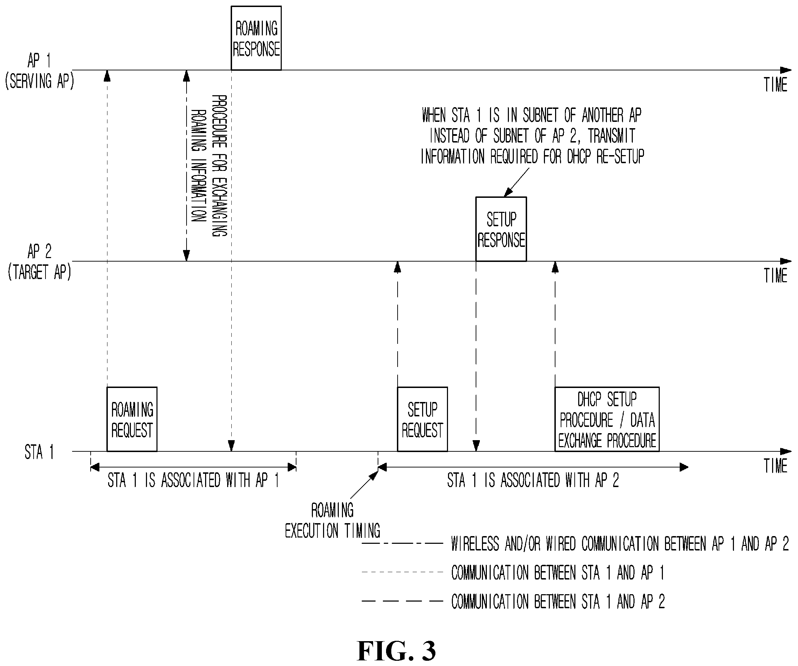

FIG. 3 is a timing diagram illustrating parameter exchange methods in a roaming procedure.

Referring to FIG. 3, AP 1, AP 2 and/or STA 1 may operate in a WLAN. AP 1 may mean AP MLD 1, and an operation of the AP 1 may be interpreted as an operation of AP MLD 1. AP 1 may be referred to as a first AP. AP 2 may mean AP MLD 2, and an operation of the AP 2 may be interpreted as an operation of AP MLD 2. AP 2 may be referred to as a second AP. STA 1 may mean STA MLD 1, and an operation of the STA 1 may be interpreted as an operation of STA MLD 1. STA 1 may be associated with (e.g., access to) AP 1 and perform communication while being associated with AP 1. STA 1 may perform a roaming procedure to communicate with AP 2. According to the roaming procedure, an AP associated with STA 1 may be changed from AP 1 to AP 2. In other words, according to the roaming procedure, a communication target of STA 1 may be changed from AP 1 to AP 2. AP 1 may mean a current AP or a serving AP. AP 2 may mean a target AP.

STA 1 may determine whether to perform the roaming procedure based on the strength (e.g., quality) of a received signal. For example, when the received signal strength of AP 1 (or the received signal strength of AP 1 + an offset (or a margin)) is lower than the received signal strength of AP 2, STA 1 may determine to perform the roaming procedure from AP 1 to AP 2. The roaming procedure may be initiated by STA 1 transmitting a link addition request (or a roaming request) for AP 2 (e.g., a target AP) to AP 1 (e.g., a serving AP). In the roaming procedure, STA 1 may perform an association procedure with AP 2 and perform communication with AP 2 after completion of the association procedure. As another method, in the roaming procedure, STA 1 may perform communication with AP 2 without performing an association procedure with AP 2.

STA 1 may transmit a probe request frame to discover AP 2 (e.g., the target AP) and receive a probe response frame in response to the probe request frame. As another method, STA 1 may discover AP 2 (e.g., the target AP) by receiving a beacon frame from AP 2. As still another method, AP 1 (e.g., the serving AP) may transmit a management frame (e.g., a beacon frame) including a neighbor report (e.g., a reduced neighbor report (RNR)). The neighbor report may include information of AP 2 (e.g., a neighbor AP, the target AP). The information of AP 2 may include at least one of a MAC address of AP 2, an operating frequency of AP 2, capability information of AP 2, an IP address of AP 2, or an indicator indicating whether re-allocation (or reassignment) (e.g., re-setting or re-configuration) of an IP address is required. The indicator indicating whether re-allocation (e.g., re-setting or re-configuration) of the IP address is required may be referred to as an "IP re-allocation indicator" or an "IP re-setting indicator." In the present disclosure, re-allocation and re-setting may be used with the same meaning.

The IP re-allocation indicator may be an indicator indicating whether an IP address should be re-allocated (e.g., re-set) to STA 1 when STA 1 is connected to AP 2 in the roaming procedure. For example, when the IP re-allocation indicator indicates the re-allocation of the IP address, STA 1 may perform an operation of re-allocation (e.g., re-setting) of the IP address when connected to AP 2. When the IP re-allocation indicator does not indicate the re-allocation of the IP address, STA 1 may not perform the operation of re-allocation (e.g., re-setting) of the IP address when connected to AP 2. In other words, the operation of re-allocation of the IP address may not be required.

When STA 1 determines to perform the roaming procedure, STA 1 may transmit a roaming request frame to AP 1. The roaming request frame may include at least one of an expected time during which the roaming procedure is performed (e.g., a time during which STA 1 is capable of communicating with AP 2), a target AP (e.g., AP 2) to which STA 1 intends to be connected, a list of target APs (e.g., a list of target APs including AP 2) to which STA 1 intends to be connected, an IP address of STA 1, subnet information of STA 1, a MAC address of STA 1, an association identifier (AID) of STA 1, or capability information of STA 1. The roaming request frame may request performance of the roaming procedure from the serving AP (e.g., AP 1) to the target AP (e.g., AP 2). The subnet may refer to a distributed system (DS).

AP 1 may receive the roaming request frame from STA 1 and perform a procedure for exchanging roaming information with AP 2 based on information included in the roaming request frame. AP 1 may identify the target AP (e.g., AP 2) based on the information included in the roaming request frame. In the procedure for exchanging roaming information, the information included in the roaming request frame transmitted by STA 1 may be exchanged between AP 1 and AP 2. In the procedure for exchanging roaming information, not only the information included in the roaming request frame transmitted by STA 1 but also information about STA 1 known by AP 1 (e.g., the IP address of STA 1, the subnet information of STA 1, the IP re-allocation indicator, the received signal strength of STA 1, the MAC address of STA 1, and/or the capability information of STA 1) may be delivered to AP 2. In addition, in the procedure for exchanging roaming information, information included in a roaming response frame transmitted by AP 1 to STA 1 may be exchanged between AP 1 and AP 2. In the procedure for exchanging roaming information, AP 2 may obtain the roaming information from AP 1. AP 2 may accept or reject the roaming procedure based on the roaming information. In other words, AP 2 may transmit information indicating acceptance or rejection of the roaming procedure to AP 1. The roaming information may be directly delivered through a wired network (e.g., an Ethernet network) between AP 1 and AP 2. Alternatively, the roaming information may be delivered through a specific network terminal (e.g., a management entity of AP 1 and AP 2). As another method, the procedure for exchanging roaming information may be performed through a wireless network (e.g., a WLAN frame exchange) of AP 1 and AP 2.

After the procedure for exchanging roaming information is completed, AP 1 may transmit a roaming response frame to STA 1. The roaming response frame may include at least one of information indicating whether AP 2 accepts the roaming procedure (e.g., roaming acceptance or roaming rejection), information on a time point at which STA 1 performs the roaming procedure (e.g., a roaming execution timing), capability information of AP 2, an IP address of AP 2, subnet information of AP 2, a MAC address of AP 2, an operating frequency (e.g., an operating channel) of AP 2, the IP re-allocation indicator, or a neighbor report (e.g., RNR) including information of AP 2. The IP re-allocation indicator may be included in the neighbor report including the information of AP 2. The neighbor report may be replaced by a multi-link element. When the neighbor report is replaced by the multi-link element, the IP re-allocation indicator may be included in the multi-link element. Alternatively, both the multi-link element and the neighbor report may be included in the roaming response frame.

As another method, AP 1 may perform the procedure for exchanging roaming information with AP 2 without receiving the roaming request frame of STA 1. After the procedure for exchanging roaming information is completed, AP 1 may transmit a roaming response frame to STA 1. As another method, AP 1 may transmit an unsolicited roaming response frame to STA 1. The unsolicited roaming response frame may be configured in the same or a similar manner as a solicited roaming response frame caused by a request (e.g., a roaming request frame) of STA 1. The unsolicited roaming response frame may include at least one of information indicating whether AP 2 accepts a roaming procedure (e.g., roaming acceptance or roaming rejection), information on a time point at which STA 1 performs the roaming procedure (e.g., a roaming execution timing), capability information of AP 2, an IP address of AP 2, subnet information of AP 2, a MAC address of AP 2, an operating frequency (e.g., an operating channel) of AP 2, an IP re-allocation indicator, or a neighbor report (e.g., RNR) including information of AP 2. The IP re-allocation indicator may be included in the neighbor report including the information of AP 2. The neighbor report may be replaced by a multi-link element. When the neighbor report is replaced by the multi-link element, the IP re-allocation indicator may be included in the multi-link element. Alternatively, both the multi-link element and the neighbor report may be included in the roaming response frame.

AP 1 may periodically transmit an unsolicited roaming response frame to STA 1. The unsolicited roaming response frame may be a periodically transmitted management frame. As another method, when it is determined that STA 1 should perform a roaming procedure, AP 1 may transmit the unsolicited roaming response frame to STA 1.

STA 1 may receive a roaming response frame (e.g., a solicited roaming response frame or an unsolicited roaming response frame) from AP 1. STA 1 may perform the roaming procedure based on information included in the roaming response frame. In other words, STA 1 may perform an association procedure (e.g., an access procedure) with a target AP (e.g., AP 2) based on the information included in the roaming response frame. When the information included in the roaming response frame indicates rejection of the roaming procedure (e.g., when AP 2 does not accept the roaming procedure), STA 1 may continue communication with AP 1 or search for another target AP. When the information included in the roaming response frame indicates acceptance of the roaming procedure (e.g., when AP 2 accepts the roaming procedure), STA 1 may perform the roaming procedure (e.g., the association procedure) with AP 2. STA 1 may perform the roaming procedure (e.g., the association procedure) based on a roaming execution timing indicated by AP 1. Depending on a situation of STA 1, an actual roaming execution timing of STA 1 may be different from the roaming execution timing indicated by AP 1. After the roaming execution timing, STA 1 may not perform communication with AP 1 but perform communication with AP 2. In other words, after the roaming execution timing, STA 1 may be in a state in which communication with AP 1 is impossible, and STA 1 may be in a state in which communication with AP 2 is possible.

In the roaming procedure, STA 1 may transmit a setup request frame to AP 2. When STA 1 is in a state in which communication with AP 2 is possible, STA 1 may transmit the setup request frame to AP 2. The setup request frame may be a frame in which STA 1 requests a setup for communication from AP 2. The setup request frame may be a management frame. For example, the setup request frame may be an association request frame. The setup request frame may be an action frame that is a type of management frame. Alternatively, the setup request frame may not be a management frame but may be a data frame (e.g., a quality of service (QoS) data frame, a QoS Null frame), a control frame, or an action frame. The setup request frame may include an IP address and/or subnet information of STA 1.

AP 2 may receive the setup request frame from STA 1. AP 2 may determine whether re-allocation of an IP address for STA 1 is required based on information (e.g., the IP address and/or the subnet information) included in the setup request frame of STA 1. The IP address included in the setup request frame may be an IP address used in communication with AP 1 to which STA 1 was previously connected. The subnet information included in the setup request frame may indicate a subnet belonging to AP 1 to which STA 1 was previously connected. AP 2 may determine by itself whether the re-allocation of the IP address for STA 1 is required. Alternatively, whether the re-allocation of the IP address for STA 1 is required may be determined by another entity (e.g., a router, a dynamic host configuration protocol (DHCP) server) connected to AP 2. When a subnet (e.g., a DS) to which AP 1 (to which STA 1 was previously connected) belongs is different from a subnet to which AP 2 belongs, it may be determined that the re-allocation of the IP address for STA 1 is required. When the subnet (e.g., the DS) to which AP 1 previously connected to STA 1 belongs is the same as the subnet to which AP 2 belongs, it may be determined that the re-allocation of the IP address for STA 1 is not required. A procedure for re-allocating an IP address (e.g., a DHCP setup procedure) may be interpreted as a DS mapping procedure.

AP 2 may transmit a setup response frame to STA 1. The setup response frame may be a management frame. For example, the setup response frame may be an association response frame. Alternatively, the setup response frame may not be a management frame but may be a data frame (e.g., a QoS data frame, a QoS Null frame), a control frame, or an action frame. The setup response frame may include an IP address and/or subnet information of AP 2. The setup response frame may further include the IP re-allocation indicator of STA 1.

STA 1 may receive the setup response frame from AP 2. When the IP re-allocation indicator included in the setup response frame indicates the re-allocation of the IP address, STA 1 and/or AP 2 may perform the procedure for re-allocating the IP address (e.g., the DHCP setup procedure). After the procedure for re-allocating the IP address is completed, STA 1 and/or AP 2 may perform data communication. As another method, STA 1 may determine by itself whether the re-allocation of the IP address is required. Since the roaming response frame (or the setup response frame) received by STA 1 includes the IP address and/or the subnet information of AP 2, STA 1 may compare each of the IP address and/or the subnet information of STA 1 with the IP address and/or the subnet information of AP 2. For example, when a subnet (e.g., a DS) to which AP 1 previously connected to STA 1 belongs is different from a subnet to which AP 2 belongs, it may be determined that the re-allocation of the IP address for STA 1 is required. When the subnet (e.g., the DS) to which AP 1 previously connected to STA 1 belongs is the same as the subnet to which AP 2 belongs, it may be determined that the re-allocation of the IP address for STA 1 is not required. If it is determined that the re-allocation of the IP address is required, even when STA 1 has not received the setup response frame or when the setup response frame does not include the IP re-allocation indicator, STA 1 and/or AP 2 may perform the procedure for re-allocating the IP address (e.g., the DHCP setup procedure). The procedure for re-allocating the IP address (e.g., the DHCP setup procedure) may be interpreted as the DS mapping procedure.

As another method, STA 1 may receive a management frame including a neighbor report including an IP re-allocation indicator from AP 1. Alternatively, STA 1 may receive a roaming response frame including the IP re-allocation indicator from AP 1. In the above-described situation, when the IP re-allocation indicator indicates that the re-allocation of the IP address is required, STA 1 and/or AP 2 may perform the procedure for re-allocating the IP address (e.g., the DHCP setup procedure).

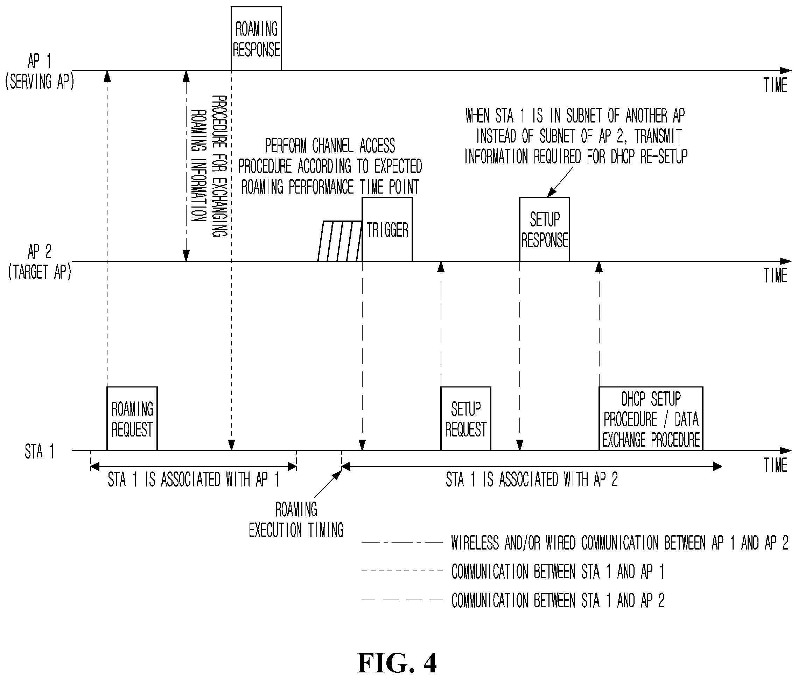

FIG. 4 is a timing diagram illustrating parameter exchange methods in a roaming procedure.

Referring to FIG. 4, AP 1, AP 2 and/or STA 1 may operate in a WLAN. AP 1 may mean AP MLD 1, and an operation of the AP 1 may be interpreted as an operation of AP MLD 1. AP 1 may be referred to as a first AP. AP 2 may mean AP MLD 2, and an operation of the AP 2 may be interpreted as an operation of AP MLD 2. AP 2 may be referred to as a second AP. STA 1 may mean STA MLD 1, and an operation of the STA 1 may be interpreted as an operation of STA MLD 1. STA 1 may be associated with (e.g., access to) AP 1 and perform communication while being associated with AP 1. STA 1 may perform a roaming procedure to communicate with AP 2. According to the roaming procedure, an AP associated with STA 1 may be changed from AP 1 to AP 2. In other words, according to the roaming procedure, a communication target of STA 1 may be changed from AP 1 to AP 2. AP 1 may mean a current AP or a serving AP. AP 2 may mean a target AP.

STA 1 may determine whether to perform the roaming procedure based on the strength (e.g., quality) of a received signal. For example, when the received signal strength of AP 1 (or the received signal strength of AP 1 + an offset (or a margin)) is lower than the received signal strength of AP 2, STA 1 may determine to perform the roaming procedure from AP 1 to AP 2. The roaming procedure may be initiated by STA 1 transmitting a link addition request (or a roaming request) for AP 2 (e.g., a target AP) to AP 1 (e.g., a serving AP). In the roaming procedure, STA 1 may perform a connection procedure with AP 2 and perform communication with AP 2 after completion of the connection procedure. As another method, in the roaming procedure, STA 1 may perform communication with AP 2 without performing an association procedure with AP 2.

STA 1 may transmit a probe request frame to discover AP 2 (e.g., the target AP) and receive a probe response frame in response to the probe request frame. As another method, STA 1 may discover AP 2 (e.g., the target AP) by receiving a beacon frame from AP 2. As still another method, AP 1 (e.g., the serving AP) may transmit a management frame (e.g., a beacon frame) including a neighbor report (e.g., a RNR). The neighbor report may include information of AP 2 (e.g., a neighbor AP, the target AP). The information of AP 2 may include at least one of a MAC address of AP 2, an operating frequency of AP 2, capability information of AP 2, an IP address of AP 2, or an IP re-allocation indicator.

The IP re-allocation indicator may be an indicator indicating whether an IP address should be re-allocated (e.g., re-set) to STA 1 when STA 1 is connected to AP 2 in the roaming procedure. For example, when the IP re-allocation indicator indicates the re-allocation of the IP address, STA 1 may perform an operation of re-allocation (e.g., re-setting) of the IP address when connected to AP 2. When the IP re-allocation indicator does not indicate the re-allocation of the IP address, STA 1 may not perform the operation of re-allocation (e.g., re-setting) of the IP address when connected to AP 2. In other words, the operation of re-allocation of the IP address may not be required.

When STA 1 determines to perform the roaming procedure, STA 1 may transmit a roaming request frame to AP 1. The roaming request frame may include at least one of an expected time during which the roaming procedure is performed (e.g., a time during which STA 1 is capable of communicating with AP 2), a target AP (e.g., AP 2) to which STA 1 intends to be connected, a list of target APs (e.g., a list of target APs including AP 2) to which STA 1 intends to be connected, an IP address of STA 1, subnet information of STA 1, a MAC address of STA 1, an AID of STA 1, or capability information of STA 1. The roaming request frame may request performance of the roaming procedure from the serving AP (e.g., AP 1) to the target AP (e.g., AP 2). A subnet may refer to a DS.

AP 1 may receive the roaming request frame from STA 1 and perform a procedure for exchanging roaming information with AP 2 based on information included in the roaming request frame. AP 1 may identify the target AP (e.g., AP 2) based on the information included in the roaming request frame. In the procedure for exchanging roaming information, the information included in the roaming request frame transmitted by STA 1 may be exchanged between AP 1 and AP 2. In the procedure for exchanging roaming information, not only the information included in the roaming request frame transmitted by STA 1 but also information about STA 1 known by AP 1 (e.g., the IP address of STA 1, the subnet information of STA 1, the IP re-allocation indicator, the received signal strength of STA 1, the MAC address of STA 1, and/or the capability information of STA 1) may be delivered to AP 2. In addition, in the procedure for exchanging roaming information, information included in a roaming response frame transmitted by AP 1 to STA 1 may be exchanged between AP 1 and AP 2. In the procedure for exchanging roaming information, AP 2 may obtain the roaming information from AP 1. AP 2 may accept or reject the roaming procedure based on the roaming information. In other words, AP 2 may transmit information indicating acceptance or rejection of the roaming procedure to AP 1. The roaming information may be directly delivered through a wired network (e.g., an Ethernet network) between AP 1 and AP 2. Alternatively, the roaming information may be delivered through a specific network terminal (e.g., a management entity of AP 1 and AP 2). As another method, the procedure for exchanging roaming information may be performed through a wireless network (e.g., a WLAN frame exchange) of AP 1 and AP 2.

After the procedure for exchanging roaming information is completed, AP 1 may transmit a roaming response frame to STA 1. The roaming response frame may include at least one of information indicating whether AP 2 accepts the roaming procedure (e.g., roaming acceptance or roaming rejection), information on a time point at which STA 1 performs the roaming procedure (e.g., a roaming execution timing), capability information of AP 2, an IP address of AP 2, subnet information of AP 2, a MAC address of AP 2, an operating frequency (e.g., an operating channel) of AP 2, the IP re-allocation indicator, or a neighbor report (e.g., RNR) including information of AP 2. The IP re-allocation indicator may be included in the neighbor report including the information of AP 2. The neighbor report may be replaced by a multi-link element. When the neighbor report is replaced by the multi-link element, the IP re-allocation indicator may be included in the multi-link element. Alternatively, both the multi-link element and the neighbor report may be included in the roaming response frame.

As another method, AP 1 may perform the procedure for exchanging roaming information with AP 2 without receiving the roaming request frame of STA 1. After the procedure for exchanging roaming information is completed, AP 1 may transmit a roaming response frame to STA 1. In other words, AP 1 may transmit an unsolicited roaming response frame to STA 1. The unsolicited roaming response frame may be configured in the same or a similar manner as a solicited roaming response frame caused by a request (e.g., a roaming request frame) of STA 1. The unsolicited roaming response frame may include at least one of information indicating whether AP 2 accepts a roaming procedure (e.g., roaming acceptance or roaming rejection), information on a time point at which STA 1 performs the roaming procedure (e.g., a roaming execution timing), capability information of AP 2, an IP address of AP 2, subnet information of AP 2, a MAC address of AP 2, an operating frequency (e.g., an operating channel) of AP 2, an IP re-allocation indicator, or a neighbor report (e.g., RNR) including information of AP 2. The IP re-allocation indicator may be included in the neighbor report including the information of AP 2. The neighbor report may be replaced by a multi-link element. When the neighbor report is replaced by the multi-link element, the IP re-allocation indicator may be included in the multi-link element. Alternatively, both the multi-link element and the neighbor report may be included in the roaming response frame.

AP 1 may periodically transmit an unsolicited roaming response frame to STA 1. The unsolicited roaming response frame may be a periodically transmitted management frame. As another method, when it is determined that STA 1 should perform a roaming procedure, AP 1 may transmit the unsolicited roaming response frame to STA 1.

STA 1 may receive a roaming response frame (e.g., a solicited roaming response frame or an unsolicited roaming response frame) from AP 1. STA 1 may perform the roaming procedure based on information included in the roaming response frame. In other words, STA 1 may perform a connection procedure (e.g., an access procedure) with a target AP (e.g., AP 2) based on the information included in the roaming response frame. When the information included in the roaming response frame indicates rejection of the roaming procedure (e.g., when AP 2 does not accept the roaming procedure), STA 1 may continue communication with AP 1 or search for another target AP. When the information included in the roaming response frame indicates acceptance of the roaming procedure (e.g., when AP 2 accepts the roaming procedure), STA 1 may perform the roaming procedure (e.g., the association procedure) with AP 2. STA 1 may perform the roaming procedure (e.g., the association procedure) based on a roaming execution timing indicated by AP 1. Depending on a situation of STA 1, an actual roaming execution timing of STA 1 may be different from the roaming execution timing indicated by AP 1. After the roaming execution timing, STA 1 may not perform communication with AP 1 but perform communication with AP 2. In other words, after the roaming execution timing, STA 1 may be in a state in which communication with AP 1 is impossible, and STA 1 may be in a state in which communication with AP 2 is possible.

AP 2 may know an expected roaming execution timing of STA 1 by performing a procedure for exchanging roaming information with AP 1. AP 2 may perform a channel access procedure (e.g., an enhanced distributed channel access (EDCA) backoff procedure) for transmission of a fast setup frame. The fast setup frame may be a trigger frame triggering transmission of a setup request frame. The channel access procedure of AP 2 may be performed before the expected roaming execution timing (e.g., at a time point at which the procedure for exchanging roaming information with AP 1 is completed or a certain time before the expected roaming execution timing). Alternatively, the channel access procedure of AP 2 may be performed after the expected roaming execution timing.

When the channel access procedure of AP 2 is performed before the expected roaming execution timing, the channel access procedure of AP 2 may be completed before the expected roaming execution timing. Completion of the channel access procedure may mean that the channel access procedure is successful. In other words, the completion of the channel access procedure may mean that an EDCA backoff counter reaches 0. When the channel access procedure of AP 2 is completed before the expected roaming execution timing, AP 2 may maintain the backoff counter (e.g., the EDCA backoff counter) at 0 until the expected roaming execution timing. In other words, AP 2 may wait without transmitting the fast setup frame even when the channel access procedure is completed. Alternatively, AP 2 may select a new backoff counter and perform the channel access procedure based on the selected new backoff counter until after the expected roaming execution timing. "When the backoff counter is maintained at 0 until the expected roaming execution timing (or after the expected roaming execution timing)" or "when the channel access procedure is completed after the expected roaming execution timing," AP 2 may transmit the fast setup frame (e.g., the trigger frame) to STA 1.

When the fast setup frame is the trigger frame, user information existing in a user information field of the trigger frame may indicate an AID of STA 1. "When AP 2 does not know the AID of STA 1" or "when the AID of STA 1 is changed due to the roaming procedure," AP 2 may transmit a trigger frame (e.g., the fast setup frame) including allocation information of a random access-resource unit (RA-RU) to perform an uplink OFDMA random access (UORA) operation. When an association procedure between STA 1 and AP 2 is not completed, the allocation information of the RA-RU may indicate an AID indicating UORA of unassociated STAs. When the association procedure between STA 1 and AP 2 is completed, the allocation information of the RA-RU may indicate an AID indicating UORA of associated STAs. STA 1 may receive the fast setup frame from AP 2. STA 1 may determine that transmission of a setup request frame is triggered by the fast setup frame. STA 1 may transmit the setup request frame to AP 2 in response to the fast setup frame. Depending on a situation of STA 1, STA 1 may not be able to perform the roaming procedure at the expected roaming execution timing. In this case, communication between STA 1 and AP 2 may be impossible. AP 2 may repeatedly transmit the fast setup frame until STA 1 can receive the fast setup frame.

The setup request frame may be a frame in which STA 1 requests a setup for communication from AP 2. The setup request frame may be a management frame. For example, the setup request frame may be an association request frame. The setup request frame may be an Action frame that is a type of management frame. Alternatively, the setup request frame may not be a management frame but may be a data frame (e.g., a QoS data frame, a QoS Null frame), a control frame, or an action frame. The setup request frame may include an IP address and/or subnet information of STA 1.

AP 2 may receive the setup request frame from STA 1. AP 2 may determine whether re-allocation of an IP address for STA 1 is required based on information (e.g., the IP address and/or the subnet information) included in the setup request frame of STA 1. AP 2 may determine by itself whether the re-allocation of the IP address for STA 1 is required. Alternatively, whether the re-allocation of the IP address for STA 1 is required may be determined by another entity (e.g., a router, a DHCP server) connected to AP 2. When a subnet (e.g., a DS) to which AP 1 previously connected to STA 1 belongs is different from a subnet to which AP 2 belongs, it may be determined that the re-allocation of the IP address for STA 1 is required. When the subnet (e.g., the DS) to which AP 1 previously connected to STA 1 belongs is the same as the subnet to which AP 2 belongs, it may be determined that the re-allocation of the IP address for STA 1 is not required. The procedure for re-allocating the IP address (e.g., the DHCP setup procedure) may be interpreted as the DS mapping procedure. AP 2 may transmit a setup response frame to STA 1. The setup response frame may be a management frame. For example, the setup response frame may be an association response frame. Alternatively, the setup response frame may not be a management frame but may be a data frame (e.g., a QoS data frame, a QoS Null frame), a control frame, or an action frame. The setup response frame may include an IP address and/or subnet information of AP 2. The setup response frame may further include the IP re-allocation indicator of STA 1.

STA 1 may receive the setup response frame from AP 2. When the IP re-allocation indicator included in the setup response frame indicates the re-allocation of the IP address, STA 1 and/or AP 2 may perform the procedure for re-allocating the IP address (e.g., the DHCP setup procedure). After the procedure for re-allocating the IP address is completed, STA 1 and/or AP 2 may perform data communication. As another method, STA 1 may determine by itself whether the re-allocation of the IP address is required. Since the roaming response frame (or the setup response frame) received by STA 1 includes the IP address and/or the subnet information of AP 2, STA 1 may compare each of the IP address and/or the subnet information of STA 1 with the IP address and/or the subnet information of AP 2. For example, when a subnet (e.g., a DS) to which AP 1 previously connected to STA 1 belongs is different from a subnet to which AP 2 belongs, it may be determined that the re-allocation of the IP address for STA 1 is required. When the subnet (e.g., the DS) to which AP 1 previously connected to STA 1 belongs is the same as the subnet to which AP 2 belongs, it may be determined that the re-allocation of the IP address for STA 1 is not required. If it is determined that the re-allocation of the IP address is required, even when STA 1 has not received the setup response frame or when the setup response frame does not include the IP re-allocation indicator, STA 1 and/or AP 2 may perform the procedure for re-allocating the IP address (e.g., the DHCP setup procedure). The procedure for re-allocating the IP address (e.g., the DHCP setup procedure) may be interpreted as the DS mapping procedure.

As still another method, STA 1 may receive a management frame including a neighbor report including an IP re-allocation indicator from AP 1. Alternatively, STA 1 may receive a roaming response frame including the IP re-allocation indicator from AP 1. In the above-described situation, when the IP re-allocation indicator indicates that the re-allocation of the IP address is required, STA 1 and/or AP 2 may perform the procedure for re-allocating the IP address (e.g., the DHCP setup procedure).

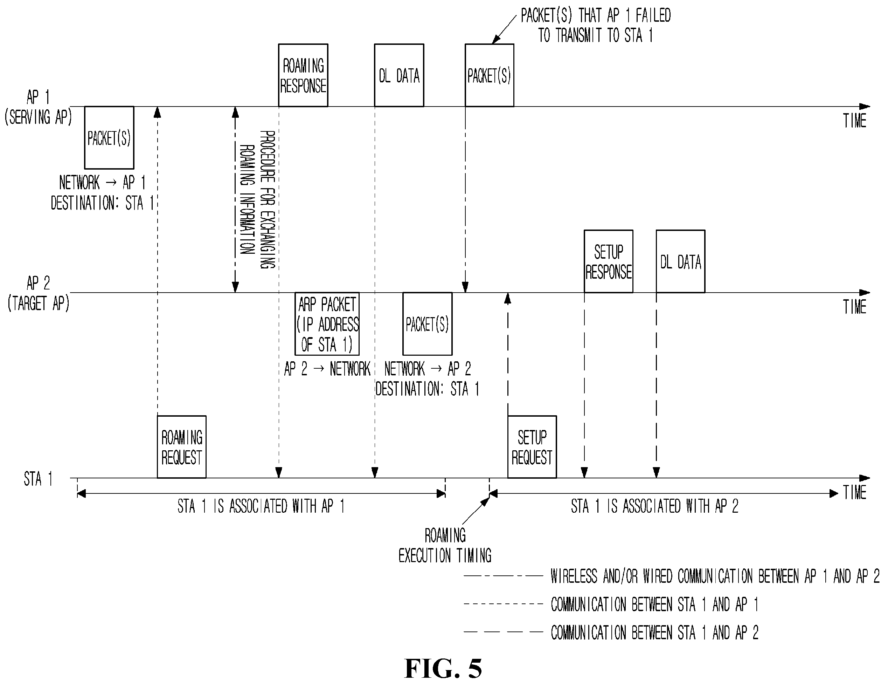

FIG. 5 is a timing diagram illustrating ARP methods in a roaming procedure.

Referring to FIG. 5, AP 1, AP 2 and/or STA 1 may operate in a WLAN. AP 1 may mean AP MLD 1, and an operation of the AP 1 may be interpreted as an operation of AP MLD 1. AP 1 may be referred to as a first AP. AP 2 may mean AP MLD 2, and an operation of the AP 2 may be interpreted as an operation of AP MLD 2. AP 2 may be referred to as a second AP. STA 1 may mean STA MLD 1, and an operation of the STA 1 may be interpreted as an operation of STA MLD 1. STA 1 may be associated with (e.g., access to) AP 1 and perform communication while being associated with AP 1. STA 1 may perform a roaming procedure to communicate with AP 2. According to the roaming procedure, an AP associated with STA 1 may be changed from AP 1 to AP 2. In other words, according to the roaming procedure, a communication target of STA 1 may be changed from AP 1 to AP 2. AP 1 may mean a current AP or a serving AP. AP 2 may mean a target AP.

STA 1 may determine whether to perform the roaming procedure based on the strength (e.g., quality) of a received signal. For example, when the received signal strength of AP 1 (or the received signal strength of AP 1 + an offset (or a margin)) is lower than the received signal strength of AP 2, STA 1 may determine to perform the roaming procedure from AP 1 to AP 2. The roaming procedure may be initiated by STA 1 transmitting a link addition request (or a roaming request) for AP 2 (e.g., a target AP) to AP 1 (e.g., a serving AP). In the roaming procedure, STA 1 may perform a connection procedure with AP 2 and perform communication with AP 2 after completion of the connection procedure. As another method, in the roaming procedure, STA 1 may perform communication with AP 2 without performing an association procedure with AP 2.

When STA 1 determines to perform the roaming procedure, STA 1 may transmit a roaming request frame to AP 1. The roaming request frame may include at least one of an expected time during which the roaming procedure is performed (e.g., a time during which STA 1 is capable of communicating with AP 2), a target AP (e.g., AP 2) to which STA 1 intends to be connected, a list of target APs (e.g., a list of target APs including AP 2) to which STA 1 intends to be connected, an IP address of STA 1, subnet information of STA 1, a MAC address of STA 1, an AID of STA 1, or capability information of STA 1. The roaming request frame may request performance of the roaming procedure from the serving AP (e.g., AP 1) to the target AP (e.g., AP 2). A subnet may refer to a DS.

AP 1 may receive the roaming request frame from STA 1 and perform a procedure for exchanging roaming information with AP 2 based on information included in the roaming request frame. AP 1 may identify the target AP (e.g., AP 2) based on the information included in the roaming request frame. In the procedure for exchanging roaming information, the information included in the roaming request frame transmitted by STA 1 may be exchanged between AP 1 and AP 2. In the procedure for exchanging roaming information, not only the information included in the roaming request frame transmitted by STA 1 but also information about STA 1 known by AP 1 (e.g., the IP address of STA 1, the subnet information of STA 1, the IP re-allocation indicator, the received signal strength of STA 1, the MAC address of STA 1, and/or the capability information of STA 1) may be delivered to AP 2. In addition, in the procedure for exchanging roaming information, information included in a roaming response frame transmitted by AP 1 to STA 1 may be exchanged between AP 1 and AP 2. In the procedure for exchanging roaming information, AP 2 may obtain the roaming information from AP 1. AP 2 may accept or reject the roaming procedure based on the roaming information. In other words, AP 2 may transmit information indicating acceptance or rejection of the roaming procedure to AP 1. The roaming information may be directly delivered through a wired network (e.g., an Ethernet network) between AP 1 and AP 2. Alternatively, the roaming information may be delivered through a specific network terminal (e.g., a management entity of AP 1 and AP 2). As another method, the procedure for exchanging roaming information may be performed through a wireless network (e.g., a WLAN frame exchange) of AP 1 and AP 2.

After the procedure for exchanging roaming information is completed, AP 1 may transmit a roaming response frame to STA 1. The roaming response frame may include at least one of information indicating whether AP 2 accepts the roaming procedure (e.g., roaming acceptance or roaming rejection), information on a time point at which STA 1 performs the roaming procedure (e.g., a roaming execution timing), capability information of AP 2, an IP address of AP 2, subnet information of AP 2, a MAC address of AP 2, an operating frequency (e.g., an operating channel) of AP 2, the IP re-allocation indicator, or a neighbor report (e.g., RNR) including information of AP 2. The IP re-allocation indicator may be included in the neighbor report including the information of AP 2. The neighbor report may be replaced by a multi-link element. When the neighbor report is replaced by the multi-link element, the IP re-allocation indicator may be included in the multi-link element. Alternatively, both the multi-link element and the neighbor report may be included in the roaming response frame.

As another method, AP 1 may perform the procedure for exchanging roaming information with AP 2 without receiving the roaming request frame of STA 1. After the procedure for exchanging roaming information is completed, AP 1 may transmit a roaming response frame to STA 1. In other words, AP 1 may transmit an unsolicited roaming response frame to STA 1. The unsolicited roaming response frame may be configured in the same or a similar manner as a solicited roaming response frame caused by a request (e.g., a roaming request frame) of STA 1.

After the procedure for exchanging roaming information between AP 1 and AP 2 is completed, AP 2 may know the IP address and/or the MAC address of STA 1. Accordingly, AP 2 may transmit an ARP packet (e.g., an ARP request packet, an ARP frame, or an ARP request frame) to a network to receive a packet (e.g., a data frame) to be delivered to STA 1 from the network (e.g., a wired Ethernet network, a DS). The ARP frame may include the IP address of STA 1. After AP 2 transmits the ARP packet to the network, AP 2 may receive packet(s) of which a destination address is set to STA 1 from the network. AP 2 may store the packet(s) for transmission. An ARP may be a protocol for query and/or response regarding a relationship between a layer 2 address and a layer 3 address (e.g., a relationship between a MAC address and an IP address). The ARP packet may be an Ethernet frame. Communication between each of the APs (e.g., AP 1 and AP 2) and the network may be performed through a wireless medium or a wired medium. The ARP packet transmitted to the network may include a destination MAC address, a source MAC address, and a body (e.g., a body of the Ethernet frame). The body of the Ethernet frame may have a structure as shown in Table 1 below. The structure of the ARP packet may vary according to a hierarchical structure of the network used.

**[Table 1]**

| Hardware type (2 bytes) | | Protocol type (2 bytes) |
|---|---|---|
| Hardware length (1 byte) | Protocol length (1 byte) | Operation (e.g., operation code) (2 bytes) |
| Sender hardware address (Ethernet: 6 bytes) | | |
| Sender protocol address (IPv4: 4 bytes) | | |
| Target hardware address (Ethernet: 6 bytes) | | |
| Target protocol address (IPv4: 4 bytes) | | |

Referring to FIG. 5 and Table 1, a hardware type and a protocol type may vary according to a hardware type and a communication protocol type of AP 2. For example, the hardware type may be Ethernet, and the protocol type may be Internet protocol version 4 (IPv4) or IPv6. A hardware length (e.g., a hardware length field) may indicate a length of a hardware address (e.g., a MAC address) of hardware indicated by the hardware type. The hardware length may be indicated in units of bytes. When the hardware address is a MAC address, the length of the MAC address is 48 bits, and thus the hardware length (e.g., the hardware length field) may indicate 6. A protocol length (e.g., a protocol length field) may indicate a length of a protocol address (e.g., an IP address) of a communication protocol indicated by the protocol type. The protocol length may be indicated in units of bytes. When the protocol address is an IPv4 address, the length of the IPv4 address is 32 bits, and thus the protocol length (e.g., the protocol length field) may indicate 4.

An operation code may indicate what operation an ARP packet indicates. In the ARP packet transmitted by AP 2, the operation code may be set to 2. The operation code set to 2 may indicate an ARP response. A sender hardware address may indicate a MAC address of STA 1. A sender protocol address may indicate an IP address of STA 1. A target hardware address may be set to FF:FF:FF:FF:FF:FF, which is a broadcast MAC address. A target protocol address may indicate the IP address of STA 1. AP 2 may transmit the ARP packet instead of STA 1. The ARP packet may be transmitted without a separate request in a network.

In the embodiment of FIG. 5, before a roaming execution timing of STA 1, AP 1 may attempt to transmit downlink packet(s), of which a destination address is set to STA 1 and that exist in a queue of AP 1. In other words, AP 1 may transmit the downlink packet(s) to STA 1. After the roaming execution timing, STA 1 may be associated (e.g., access) with AP 2 and perform communication with AP 2 in a state of being associated with AP 2. An association procedure (e.g., an access procedure) between STA 1 and AP 2 may be the same as or similar to the embodiment illustrated in FIG. 3 and/or FIG. 4. After the roaming execution timing, AP 1 may have downlink packet(s) that were not transmitted to STA 1. AP 1 may transmit the downlink packet(s) that were not transmitted to STA 1 to AP 2. AP 2 may receive the downlink packet(s) from AP 1 and transmit the downlink packet(s) to STA 1.

As another method, an operation of AP 1 transmitting downlink packet(s) that were not transmitted to STA 1 to STA 1 after the roaming execution timing may be allowed. For example, after the roaming execution timing, STA 1 may receive the downlink packet(s) from AP 1. A packet transmittable from AP 1 to STA 1 after the roaming execution timing may be limited to a downlink packet that was not transmitted from AP 1 to STA 1 before the roaming execution timing. When AP 1 does not transmit all packet(s) of which the destination address is set to STA 1, AP 1 may transmit the packet(s) of which the destination address is set to STA 1 to AP 2, and AP 2 may transmit the packet(s) received from AP 1 to STA 1.

The above-described transmission/reception procedure for ARP packets may be performed for DS mapping. A DS mapping procedure (e.g., a DS mapping change procedure) may mean a packet path change procedure (e.g., a path switching procedure). According to the DS mapping procedure, a packet path may be changed from 'STA 1 - serving AP (e.g., AP 1) - first DS (e.g., a DS to which the serving AP belongs)' to 'STA 1 - target AP (e.g., AP 2) - second DS (e.g., a DS to which the target AP belongs)'. In other words, according to the DS mapping procedure, a DS to which STA 1 is mapped may be changed from the first DS to which the serving AP belongs to the first DS to which the target AP belongs. The DS mapping procedure may be performed for a roaming procedure for STA 1. When the first DS to which the serving AP (e.g., AP 1) belongs and the second DS to which the target AP (e.g., AP 2) belongs are different, the DS mapping procedure may be performed. An ARP packet (e.g., an ARP frame) may be a request frame requesting initiation of the DS mapping procedure. For example, the ARP packet may be a DS mapping request frame. At least one of the serving AP or the target AP may transmit a DS mapping request frame to initiate the DS mapping procedure.

For example, the serving AP may transmit a DS mapping request frame to the first DS (e.g., an entity within the first DS) to which the serving AP belongs. The DS mapping request frame transmitted by the serving AP may include information of the target AP (e.g., address information, capability information, and/or context information), information of STA 1 (e.g., address information, capability information, and/or context information), and/or information of the second DS to which the target AP belongs. The first DS may receive the DS mapping request frame from the serving AP and perform DS mapping (e.g., DS change, path change, path switching) based on the DS mapping request frame. When the DS mapping is completed, the first DS may transmit a DS mapping response frame (e.g., an ARP response frame) indicating the completion of the DS mapping procedure to the serving AP. The serving AP may receive the DS mapping response frame from the first DS and determine that the DS mapping procedure is completed based on the DS mapping response frame. The serving AP may notify the target AP that the DS mapping procedure is completed. When the DS mapping procedure is completed, a packet may be transmitted and received through a path of 'STA 1 - target AP (e.g., AP 2) - second DS (e.g., a DS to which the target AP belongs)'.

As another example, the target AP may transmit a DS mapping request frame to the second DS (e.g., an entity within the second DS) to which the target AP belongs. The DS mapping request frame transmitted by the target AP may include information of the serving AP (e.g., address information, capability information, and/or context information), information of STA 1 (e.g., address information, capability information, and/or context information), and/or information of the first DS to which the serving AP belongs. The second DS may receive the DS mapping request frame from the target AP and perform DS mapping (e.g., DS change, path change, path switching) based on the DS mapping request frame. When the DS mapping is completed, the second DS may transmit a DS mapping response frame indicating the completion of the DS mapping procedure to the target AP. The target AP may receive the DS mapping response frame from the second DS and determine that the DS mapping procedure is completed based on the DS mapping response frame. The target AP may notify the serving AP that the DS mapping procedure is completed. When the DS mapping procedure is completed, a packet may be transmitted and received through a path of 'STA 1 - target AP (e.g., AP 2) - second DS (e.g., a DS to which the target AP belongs)'.

A combination of the embodiment of FIG. 5 and the embodiment of FIG. 3 or FIG. 4 may be used. For example, the IP address re-allocation procedure of STA 1 may be applied to the embodiment of FIG. 5. When the IP address re-allocation procedure of STA 1 is completed, a transmission/reception procedure of a data frame between STA 1 and AP 2 may be performed.

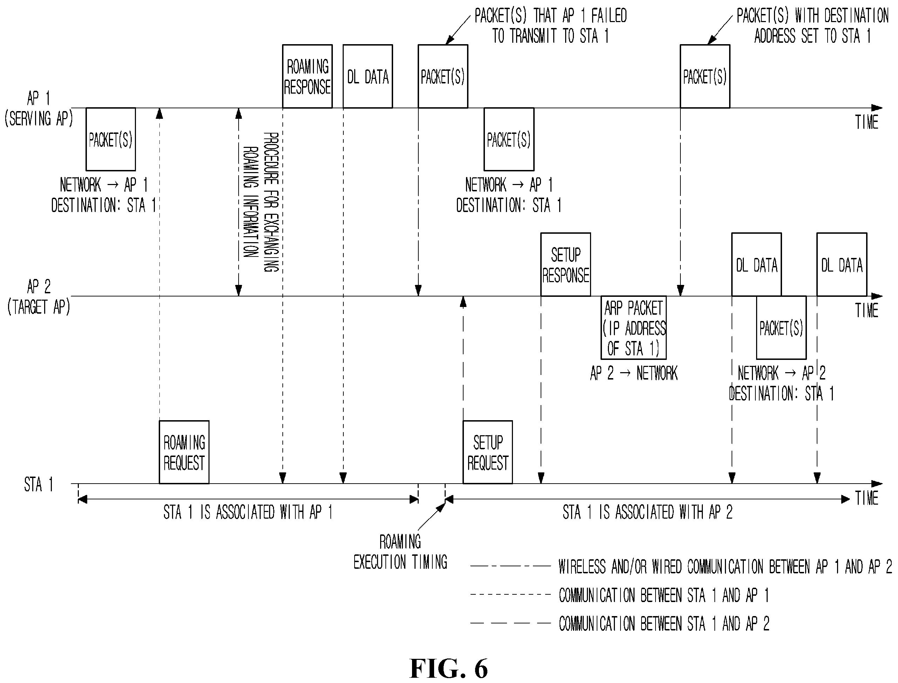

FIG. 6 is a timing diagram illustrating ARP methods in a roaming procedure.

Referring to FIG. 6, AP 1, AP 2 and/or STA 1 may operate in a WLAN. AP 1 may mean AP MLD 1, and an operation of the AP 1 may be interpreted as an operation of AP MLD 1. AP 1 may be referred to as a first AP. AP 2 may mean AP MLD 2, and an operation of the AP 2 may be interpreted as an operation of AP MLD 2. AP 2 may be referred to as a second AP. STA 1 may mean STA MLD 1, and an operation of the STA 1 may be interpreted as an operation of STA MLD 1. STA 1 may be associated with (e.g., access to) AP 1 and perform communication while being associated with AP 1. STA 1 may perform a roaming procedure to communicate with AP 2. According to the roaming procedure, an AP associated with STA 1 may be changed from AP 1 to AP 2. In other words, according to the roaming procedure, a communication target of STA 1 may be changed from AP 1 to AP 2. AP 1 may mean a current AP or a serving AP. AP 2 may mean a target AP.

STA 1 may determine whether to perform the roaming procedure based on the strength (e.g., quality) of a received signal. For example, when the received signal strength of AP 1 (or the received signal strength of AP 1 + an offset (or a margin)) is lower than the received signal strength of AP 2, STA 1 may determine to perform the roaming procedure from AP 1 to AP 2. The roaming procedure may be initiated by STA 1 transmitting a link addition request (or a roaming request) for AP 2 (e.g., a target AP) to AP 1 (e.g., a serving AP). In the roaming procedure, STA 1 may perform a connection procedure with AP 2 and perform communication with AP 2 after completion of the connection procedure. As another method, in the roaming procedure, STA 1 may perform communication with AP 2 without performing an association procedure with AP 2.

When STA 1 determines to perform the roaming procedure, STA 1 may transmit a roaming request frame to AP 1. The roaming request frame may include at least one of an expected time during which the roaming procedure is performed (e.g., a time during which STA 1 is capable of communicating with AP 2), a target AP (e.g., AP 2) to which STA 1 intends to be connected, a list of target APs (e.g., a list of target APs including AP 2) to which STA 1 intends to be connected, an IP address of STA 1, subnet information of STA 1, a MAC address of STA 1, an AID of STA 1, or capability information of STA 1. The roaming request frame may request performance of the roaming procedure from the serving AP (e.g., AP 1) to the target AP (e.g., AP 2). A subnet may refer to a DS.

AP 1 may receive the roaming request frame from STA 1 and perform a procedure for exchanging roaming information with AP 2 based on information included in the roaming request frame. AP 1 may identify the target AP (e.g., AP 2) based on the information included in the roaming request frame. In the procedure for exchanging roaming information, the information included in the roaming request frame transmitted by STA 1 may be exchanged between AP 1 and AP 2. In the procedure for exchanging roaming information, not only the information included in the roaming request frame transmitted by STA 1 but also information about STA 1 known by AP 1 (e.g., the IP address of STA 1, the subnet information of STA 1, the IP re-allocation indicator, the received signal strength of STA 1, the MAC address of STA 1, and/or the capability information of STA 1) may be delivered to AP 2. In addition, in the procedure for exchanging roaming information, information included in a roaming response frame transmitted by AP 1 to STA 1 may be exchanged between AP 1 and AP 2. In the procedure for exchanging roaming information, AP 2 may obtain the roaming information from AP 1. AP 2 may accept or reject the roaming procedure based on the roaming information. In other words, AP 2 may transmit information indicating acceptance or rejection of the roaming procedure to AP 1. The roaming information may be directly delivered through a wired network (e.g., an Ethernet network) between AP 1 and AP 2. Alternatively, the roaming information may be delivered through a specific network terminal (e.g., a management entity of AP 1 and AP 2). As another method, the procedure for exchanging roaming information may be performed through a wireless network (e.g., a WLAN frame exchange) of AP 1 and AP 2.

After the procedure for exchanging roaming information is completed, AP 1 may transmit a roaming response frame to STA 1. The roaming response frame may include at least one of information indicating whether AP 2 accepts the roaming procedure (e.g., roaming acceptance or roaming rejection), information on a time point at which STA 1 performs the roaming procedure (e.g., a roaming execution timing), capability information of AP 2, an IP address of AP 2, subnet information of AP 2, a MAC address of AP 2, an operating frequency (e.g., an operating channel) of AP 2, the IP re-allocation indicator, or a neighbor report (e.g., RNR) including information of AP 2. The IP re-allocation indicator may be included in the neighbor report including the information of AP 2. The neighbor report may be replaced by a multi-link element. When the neighbor report is replaced by the multi-link element, the IP re-allocation indicator may be included in the multi-link element. Alternatively, both the multi-link element and the neighbor report may be included in the roaming response frame.

As another method, AP 1 may perform the procedure for exchanging roaming information with AP 2 without receiving the roaming request frame of STA 1. After the procedure for exchanging roaming information is completed, AP 1 may transmit a roaming response frame to STA 1. In other words, AP 1 may transmit an unsolicited roaming response frame to STA 1. The unsolicited roaming response frame may be configured in the same or a similar manner as a solicited roaming response frame caused by a request (e.g., a roaming request frame) of STA 1.

Before a roaming execution timing of STA 1, AP 1 may attempt to transmit downlink packet(s), of which a destination address is set to STA 1 and that exist in a queue of AP 1. In other words, AP 1 may transmit the downlink packet(s) to STA 1. After the roaming execution timing, STA 1 may be associated (e.g., access) with AP 2 and perform communication with AP 2 in a state of being associated with AP 2. An association procedure (e.g., an access procedure) between STA 1 and AP 2 may be the same as or similar to the embodiment illustrated in FIG. 3 and/or FIG. 4. After the roaming execution timing, AP 1 may have downlink packet(s) that were not transmitted to STA 1. AP 1 may transmit the downlink packet(s) that were not transmitted to STA 1 to AP 2. AP 2 may receive the downlink packet(s) from AP 1.

After a roaming procedure between STA 1 and AP 2 is completed, AP 2 may transmit an ARP packet (e.g., an ARP request packet, an ARP frame, or an ARP request frame) to a network (e.g., a wired Ethernet network or a DS) to receive a packet to be delivered to STA 1 from the network. In other words, when a transmission/reception procedure of a setup request frame and a setup response frame is completed (e.g., when an association procedure between AP 2 and STA 1 is completed), AP 2 may transmit an ARP frame to the network. The ARP frame may include the IP address of STA 1. After AP 2 transmits the ARP packet to the network, AP 2 may receive packet(s) of which a destination address is set to STA 1 from the network. AP 2 may store the packet(s) for transmission. An ARP may be a protocol for query and/or response regarding a relationship between a layer 2 address and a layer 3 address (e.g., a relationship between a MAC address and an IP address). The ARP packet may be an Ethernet frame. Communication between each of the APs (e.g., AP 1 and AP 2) and the network may be performed through a wireless medium or a wired medium. The ARP packet transmitted to the network may include a destination MAC address, a source MAC address, and a body (e.g., a body of the Ethernet frame). The body of the Ethernet frame may have a structure as shown in Table 1 above. The structure of the ARP packet may vary according to a hierarchical structure of the network used.

Referring to FIG. 6 and Table 1, a hardware type and a protocol type may vary according to a hardware type and a communication protocol type of AP 2. For example, the hardware type may be Ethernet, and the protocol type may be IPv4 or IPv6. A hardware length (e.g., a hardware length field) may indicate a length of a hardware address (e.g., a MAC address) of hardware indicated by the hardware type. The hardware length may be indicated in units of bytes. When the hardware address is a MAC address, the length of the MAC address is 48 bits, and thus the hardware length (e.g., the hardware length field) may indicate 6. A protocol length (e.g., a protocol length field) may indicate a length of a protocol address (e.g., an IP address) of a communication protocol indicated by the protocol type. The protocol length may be indicated in units of bytes. When the protocol address is an IPv4 address, the length of the IPv4 address is 32 bits, and thus the protocol length (e.g., the protocol length field) may indicate 4.

An operation code may indicate what operation an ARP packet indicates. In the ARP packet transmitted by AP 2, the operation code may be set to 2. The operation code set to 2 may indicate an ARP response. A sender hardware address may indicate a MAC address of STA 1. A sender protocol address may indicate an IP address of STA 1. A target hardware address may be set to FF:FF:FF:FF:FF:FF, which is a broadcast MAC address. A target protocol address may indicate the IP address of STA 1. AP 2 may transmit the ARP packet instead of STA 1. The ARP packet may be transmitted without a separate request in a network.

In the embodiment of FIG. 6, the ARP packet of AP 2 may be transmitted after a roaming execution timing of STA 1. In other words, the ARP packet of AP 2 may be transmitted after STA 1 is associated to AP 2. Even after the roaming execution timing of STA 1, a network may transmit packet(s), of which a destination address is set to STA 1 to the AP 1 that is an AP to which STA 1 was previously associated. AP 1 may transmit the packet(s) received from the network (e.g., the packet(s) of which the destination address is set to STA 1) to AP 2. AP 2 may receive the packet(s) from AP 1. AP 2 may transmit the packet(s) received from the network and/or the packet(s) received from AP 1 to STA 1. STA 1 may receive the packet(s) from AP 2.

As another method, after the roaming execution timing, an operation of AP 1 transmitting packet(s), of which the destination address is set to STA 1, to STA 1 may be allowed. For example, after the roaming execution timing, STA 1 may receive the packet(s) from AP 1. A packet transmittable from AP 1 to STA 1 after the roaming execution timing may be limited to a packet of which the destination address is set to STA 1 and that is received by AP 1 from the network after the roaming execution timing. When AP 1 does not transmit all packet(s) of which the destination address is set to STA 1, AP 1 may transmit the packet(s) of which the destination address is set to STA 1 to AP 2, and AP 2 may transmit the packet(s) received from AP 1 to STA 1.

The above-described transmission/reception procedure for ARP packets may be performed for DS mapping. A DS mapping procedure (e.g., a DS mapping change procedure) may mean a packet path change procedure (e.g., a path switching procedure). According to the DS mapping procedure, a packet path may be changed from 'STA 1 - serving AP (e.g., AP 1) - first DS (e.g., a DS to which the serving AP belongs)' to 'STA 1 - target AP (e.g., AP 2) - second DS (e.g., a DS to which the target AP belongs)'. In other words, according to the DS mapping procedure, a DS to which STA 1 is mapped may be changed from the first DS to which the serving AP belongs to the first DS to which the target AP belongs. The DS mapping procedure may be performed for a roaming procedure for STA 1. When the first DS to which the serving AP (e.g., AP 1) belongs and the second DS to which the target AP (e.g., AP 2) belongs are different, the DS mapping procedure may be performed. An ARP packet (e.g., an ARP frame) may be a request frame requesting initiation of the DS mapping procedure. For example, the ARP packet may be a DS mapping request frame. At least one of the serving AP or the target AP may transmit a DS mapping request frame to initiate the DS mapping procedure.

For example, the serving AP may transmit a DS mapping request frame to the first DS (e.g., an entity within the first DS) to which the serving AP belongs. The DS mapping request frame transmitted by the serving AP may include information of the target AP (e.g., address information, capability information, and/or context information), information of STA 1 (e.g., address information, capability information, and/or context information), and/or information of the second DS to which the target AP belongs. The first DS may receive the DS mapping request frame from the serving AP and perform DS mapping (e.g., DS change, path change, path switching) based on the DS mapping request frame. When the DS mapping is completed, the first DS may transmit a DS mapping response frame (e.g., an ARP response frame) indicating the completion of the DS mapping procedure to the serving AP. The serving AP may receive the DS mapping response frame from the first DS and determine that the DS mapping procedure is completed based on the DS mapping response frame. The serving AP may notify the target AP that the DS mapping procedure is completed. When the DS mapping procedure is completed, a packet may be transmitted and received through a path of 'STA 1 - target AP (e.g., AP 2) - second DS (e.g., a DS to which the target AP belongs)'.

As another example, the target AP may transmit a DS mapping request frame to the second DS (e.g., an entity within the second DS) to which the target AP belongs. The DS mapping request frame transmitted by the target AP may include information of the serving AP (e.g., address information, capability information, and/or context information), information of STA 1 (e.g., address information, capability information, and/or context information), and/or information of the first DS to which the serving AP belongs. The second DS may receive the DS mapping request frame from the target AP and perform DS mapping (e.g., DS change, path change, path switching) based on the DS mapping request frame. When the DS mapping is completed, the second DS may transmit a DS mapping response frame indicating the completion of the DS mapping procedure to the target AP. The target AP may receive the DS mapping response frame from the second DS and determine that the DS mapping procedure is completed based on the DS mapping response frame. The target AP may notify the serving AP that the DS mapping procedure is completed. When the DS mapping procedure is completed, a packet may be transmitted and received through a path of 'STA 1 - target AP (e.g., AP 2) - second DS (e.g., a DS to which the target AP belongs)'.

A combination of the embodiment of FIG. 6 and the embodiment of FIG. 3 or FIG. 4 may be used. For example, the IP address re-allocation procedure of STA 1 may be applied to the embodiment of FIG. 6. When the IP address re-allocation procedure of STA 1 is completed, a transmission/reception procedure of a data frame between STA 1 and AP 2 may be performed.

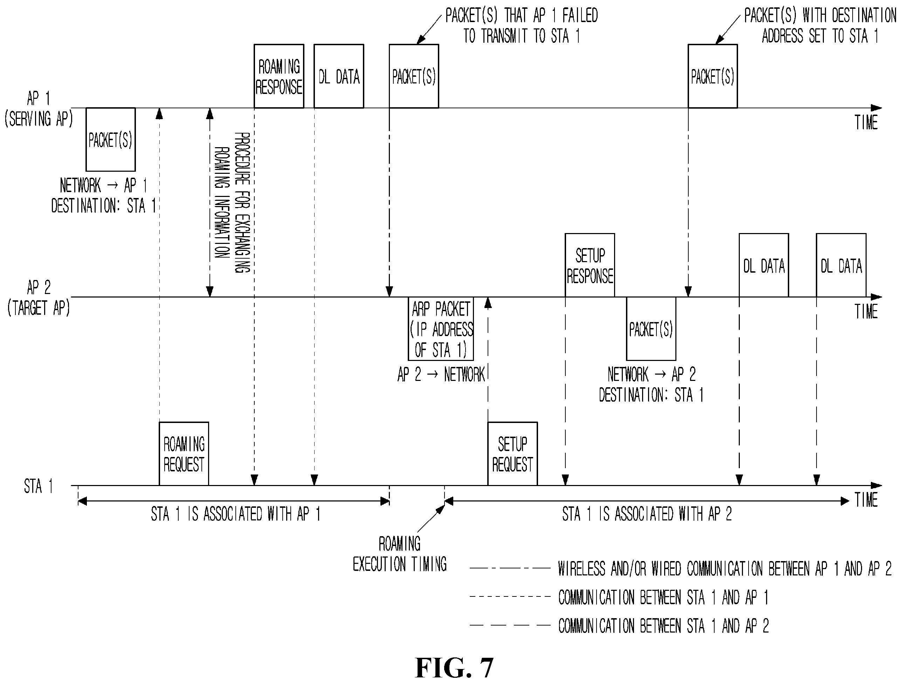

FIG. 7 is a timing diagram illustrating ARP methods in a roaming procedure.

Referring to FIG. 7, AP 1, AP 2 and/or STA 1 may operate in a WLAN. AP 1 may mean AP MLD 1, and an operation of the AP 1 may be interpreted as an operation of AP MLD 1. AP 1 may be referred to as a first AP. AP 2 may mean AP MLD 2, and an operation of the AP 2 may be interpreted as an operation of AP MLD 2. AP 2 may be referred to as a second AP. STA 1 may mean STA MLD 1, and an operation of the STA 1 may be interpreted as an operation of STA MLD 1. STA 1 may be associated with (e.g., access to) AP 1 and perform communication while being associated with AP 1. STA 1 may perform a roaming procedure to communicate with AP 2. According to the roaming procedure, an AP associated with STA 1 may be changed from AP 1 to AP 2. In other words, according to the roaming procedure, a communication target of STA 1 may be changed from AP 1 to AP 2. AP 1 may mean a current AP or a serving AP. AP 2 may mean a target AP.

STA 1 may determine whether to perform the roaming procedure based on the strength (e.g., quality) of a received signal. For example, when the received signal strength of AP 1 (or the received signal strength of AP 1 + an offset (or a margin)) is lower than the received signal strength of AP 2, STA 1 may determine to perform the roaming procedure from AP 1 to AP 2. The roaming procedure may be initiated by STA 1 transmitting a link addition request (or a roaming request) for AP 2 (e.g., a target AP) to AP 1 (e.g., a serving AP). In the roaming procedure, STA 1 may perform a connection procedure with AP 2 and perform communication with AP 2 after completion of the connection procedure. As another method, in the roaming procedure, STA 1 may perform communication with AP 2 without performing an association procedure with AP 2.

When STA 1 determines to perform the roaming procedure, STA 1 may transmit a roaming request frame to AP 1. The roaming request frame may include at least one of an expected time during which the roaming procedure is performed (e.g., a time during which STA 1 is capable of communicating with AP 2), a target AP (e.g., AP 2) to which STA 1 intends to be connected, a list of target APs (e.g., a list of target APs including AP 2) to which STA 1 intends to be connected, an IP address of STA 1, subnet information of STA 1, a MAC address of STA 1, an AID of STA 1, or capability information of STA 1. The roaming request frame may request performance of the roaming procedure from the serving AP (e.g., AP 1) to the target AP (e.g., AP 2). A subnet may refer to a DS.

AP 1 may receive the roaming request frame from STA 1 and perform a procedure for exchanging roaming information with AP 2 based on information included in the roaming request frame. AP 1 may identify the target AP (e.g., AP 2) based on the information included in the roaming request frame. In the procedure for exchanging roaming information, the information included in the roaming request frame transmitted by STA 1 may be exchanged between AP 1 and AP 2. In the procedure for exchanging roaming information, not only the information included in the roaming request frame transmitted by STA 1 but also information about STA 1 known by AP 1 (e.g., the IP address of STA 1, the subnet information of STA 1, the IP re-allocation indicator, the received signal strength of STA 1, the MAC address of STA 1, and/or the capability information of STA 1) may be delivered to AP 2. In addition, in the procedure for exchanging roaming information, information included in a roaming response frame transmitted by AP 1 to STA 1 may be exchanged between AP 1 and AP 2. In the procedure for exchanging roaming information, AP 2 may obtain the roaming information from AP 1. AP 2 may accept or reject the roaming procedure based on the roaming information. In other words, AP 2 may transmit information indicating acceptance or rejection of the roaming procedure to AP 1. The roaming information may be directly delivered through a wired network (e.g., an Ethernet network) between AP 1 and AP 2. Alternatively, the roaming information may be delivered through a specific network terminal (e.g., a management entity of AP 1 and AP 2). As another method, the procedure for exchanging roaming information may be performed through a wireless network (e.g., a WLAN frame exchange) of AP 1 and AP 2.

After the procedure for exchanging roaming information is completed, AP 1 may transmit a roaming response frame to STA 1. The roaming response frame may include at least one of information indicating whether AP 2 accepts the roaming procedure (e.g., roaming acceptance or roaming rejection), information on a time point at which STA 1 performs the roaming procedure (e.g., a roaming execution timing), capability information of AP 2, an IP address of AP 2, subnet information of AP 2, a MAC address of AP 2, an operating frequency (e.g., an operating channel) of AP 2, the IP re-allocation indicator, or a neighbor report (e.g., RNR) including information of AP 2. The IP re-allocation indicator may be included in the neighbor report including the information of AP 2. The neighbor report may be replaced by a multi-link element. When the neighbor report is replaced by the multi-link element, the IP re-allocation indicator may be included in the multi-link element. Alternatively, both the multi-link element and the neighbor report may be included in the roaming response frame.

As another method, AP 1 may perform the procedure for exchanging roaming information with AP 2 without receiving the roaming request frame of STA 1. After the procedure for exchanging roaming information is completed, AP 1 may transmit a roaming response frame to STA 1. In other words, AP 1 may transmit an unsolicited roaming response frame to STA 1. The unsolicited roaming response frame may be configured in the same or a similar manner as a solicited roaming response frame caused by a request (e.g., a roaming request frame) of STA 1.

Before a roaming execution timing of STA 1, AP 1 may attempt to transmit downlink packet(s), of which a destination address is set to STA 1 and that exist in a queue of AP 1. In other words, AP 1 may transmit the downlink packet(s) to STA 1. After the roaming execution timing, STA 1 may be associated (e.g., access) with AP 2 and perform communication with AP 2 in a state of being associated with AP 2. An association procedure (e.g., an access procedure) between STA 1 and AP 2 may be the same as or similar to the embodiment illustrated in FIG. 3 and/or FIG. 4. After the roaming execution timing, AP 1 may have downlink packet(s) that were not transmitted to STA 1. AP 1 may transmit the downlink packet(s) that were not transmitted to STA 1 to AP 2. AP 2 may receive the downlink packet(s) from AP 1.

At the roaming execution timing (e.g., before the roaming execution timing), AP 2 may transmit an ARP packet (e.g., an ARP request packet, an ARP frame, or an ARP request frame) to a network (e.g., a wired Ethernet network, a DS) to receive a packet delivered to STA 1 from the network. The ARP frame may include the IP address of STA 1. After AP 2 transmits the ARP packet to the network, AP 2 may receive packet(s) of which a destination address is set to STA 1 from the network. AP 2 may store the packet(s) for transmission. An ARP may be a protocol for query and/or response regarding a relationship between a layer 2 address and a layer 3 address (e.g., a relationship between a MAC address and an IP address). The ARP packet may be an Ethernet frame. Communication between each of the APs (e.g., AP 1 and AP 2) and the network may be performed through a wireless medium or a wired medium. The ARP packet transmitted to the network may include a destination MAC address, a source MAC address, and a body (e.g., a body of the Ethernet frame). The body of the Ethernet frame may have a structure as shown in Table 1 above. The structure of the ARP packet may vary according to a hierarchical structure of the network used.

Referring to FIG. 7 and Table 1, a hardware type and a protocol type may vary according to a hardware type and a communication protocol type of AP 2. For example, the hardware type may be Ethernet, and the protocol type may be IPv4 or IPv6. A hardware length (e.g., a hardware length field) may indicate a length of a hardware address (e.g., a MAC address) of hardware indicated by the hardware type. The hardware length may be indicated in units of bytes. When the hardware address is a MAC address, the length of the MAC address is 48 bits, and thus the hardware length (e.g., the hardware length field) may indicate 6. A protocol length (e.g., a protocol length field) may indicate a length of a protocol address (e.g., an IP address) of a communication protocol indicated by the protocol type. The protocol length may be indicated in units of bytes. When the protocol address is an IPv4 address, the length of the IPv4 address is 32 bits, and thus the protocol length (e.g., the protocol length field) may indicate 4.

An operation code may indicate what operation an ARP packet indicates. In the ARP packet transmitted by AP 2, the operation code may be set to 2. The operation code set to 2 may indicate an ARP response. A sender hardware address may indicate a MAC address of STA 1. A sender protocol address may indicate an IP address of STA 1. A target hardware address may be set to FF:FF:FF:FF:FF:FF, which is a broadcast MAC address. A target protocol address may indicate the IP address of STA 1. AP 2 may transmit the ARP packet instead of STA 1. The ARP packet may be transmitted without a separate request in a network.

In the embodiment of FIG. 7, the ARP packet of AP 2 may be transmitted at a roaming execution timing (e.g., before the roaming execution timing) of STA 1. In other words, the ARP packet of AP 2 may be transmitted at a time point at which STA 1 is associated to AP 2. Alternatively, the ARP packet of AP 2 may be transmitted before STA 1 is associated to AP 2. A network may transmit packet(s), of which a destination address is set to STA 1, to AP 1 that is an AP to which STA 1 was previously associated. AP 1 may transmit the packet(s) received from the network (e.g., the packet(s) of which the destination address is set to STA 1) to AP 2. AP 2 may receive the packet(s) from AP 1. AP 2 may transmit the packet(s) received from the network and/or the packet(s) received from AP 1 to STA 1. STA 1 may receive the packet(s) from AP 2.

As another method, after the roaming execution timing, an operation of AP 1 transmitting packet(s), of which the destination address is set to STA 1, to STA 1 may be allowed. For example, after the roaming execution timing, STA 1 may receive the packet(s) from AP 1. A packet transmittable from AP 1 to STA 1 after the roaming execution timing may be limited to a packet of which the destination address is set to STA 1 and that is received by AP 1 from the network. When AP 1 does not transmit all packet(s) of which the destination address is set to STA 1, AP 1 may transmit the packet(s) of which the destination address is set to STA 1 to AP 2, and AP 2 may transmit the packet(s) received from AP 1 to STA 1.

The above-described transmission/reception procedure for ARP packets may be performed for DS mapping. A DS mapping procedure (e.g., a DS mapping change procedure) may mean a packet path change procedure (e.g., a path switching procedure). According to the DS mapping procedure, a packet path may be changed from 'STA 1 - serving AP (e.g., AP 1) - first DS (e.g., a DS to which the serving AP belongs)' to 'STA 1 - target AP (e.g., AP 2) - second DS (e.g., a DS to which the target AP belongs)'. In other words, according to the DS mapping procedure, a DS to which STA 1 is mapped may be changed from the first DS to which the serving AP belongs to the first DS to which the target AP belongs. The DS mapping procedure may be performed for a roaming procedure for STA 1. When the first DS to which the serving AP (e.g., AP 1) belongs and the second DS to which the target AP (e.g., AP 2) belongs are different, the DS mapping procedure may be performed. An ARP packet (e.g., an ARP frame) may be a request frame requesting initiation of the DS mapping procedure. For example, the ARP packet may be a DS mapping request frame. At least one of the serving AP or the target AP may transmit a DS mapping request frame to initiate the DS mapping procedure.

For example, the serving AP may transmit a DS mapping request frame to the first DS (e.g., an entity within the first DS) to which the serving AP belongs. The DS mapping request frame transmitted by the serving AP may include information of the target AP (e.g., address information, capability information, and/or context information), information of STA 1 (e.g., address information, capability information, and/or context information), and/or information of the second DS to which the target AP belongs. The first DS may receive the DS mapping request frame from the serving AP and perform DS mapping (e.g., DS change, path change, path switching) based on the DS mapping request frame. When the DS mapping is completed, the first DS may transmit a DS mapping response frame (e.g., an ARP response frame) indicating the completion of the DS mapping procedure to the serving AP. The serving AP may receive the DS mapping response frame from the first DS and determine that the DS mapping procedure is completed based on the DS mapping response frame. The serving AP may notify the target AP that the DS mapping procedure is completed. When the DS mapping procedure is completed, a packet may be transmitted and received through a path of 'STA 1 - target AP (e.g., AP 2) - second DS (e.g., a DS to which the target AP belongs)'.

As another example, the target AP may transmit a DS mapping request frame to the second DS (e.g., an entity within the second DS) to which the target AP belongs. The DS mapping request frame transmitted by the target AP may include information of the serving AP (e.g., address information, capability information, and/or context information), information of STA 1 (e.g., address information, capability information, and/or context information), and/or information of the first DS to which the serving AP belongs. The second DS may receive the DS mapping request frame from the target AP and perform DS mapping (e.g., DS change, path change, path switching) based on the DS mapping request frame. When the DS mapping is completed, the second DS may transmit a DS mapping response frame indicating the completion of the DS mapping procedure to the target AP. The target AP may receive the DS mapping response frame from the second DS and determine that the DS mapping procedure is completed based on the DS mapping response frame. The target AP may notify the serving AP that the DS mapping procedure is completed. When the DS mapping procedure is completed, a packet may be transmitted and received through a path of 'STA 1 - target AP (e.g., AP 2) - second DS (e.g., a DS to which the target AP belongs)'.

A combination of the embodiment of FIG. 7 and the embodiment of FIG. 3 or FIG. 4 may be used. For example, the IP address re-allocation procedure of STA 1 may be applied to the embodiment of FIG. 7. When the IP address re-allocation procedure of STA 1 is completed, a transmission/reception procedure of a data frame between STA 1 and AP 2 may be performed.

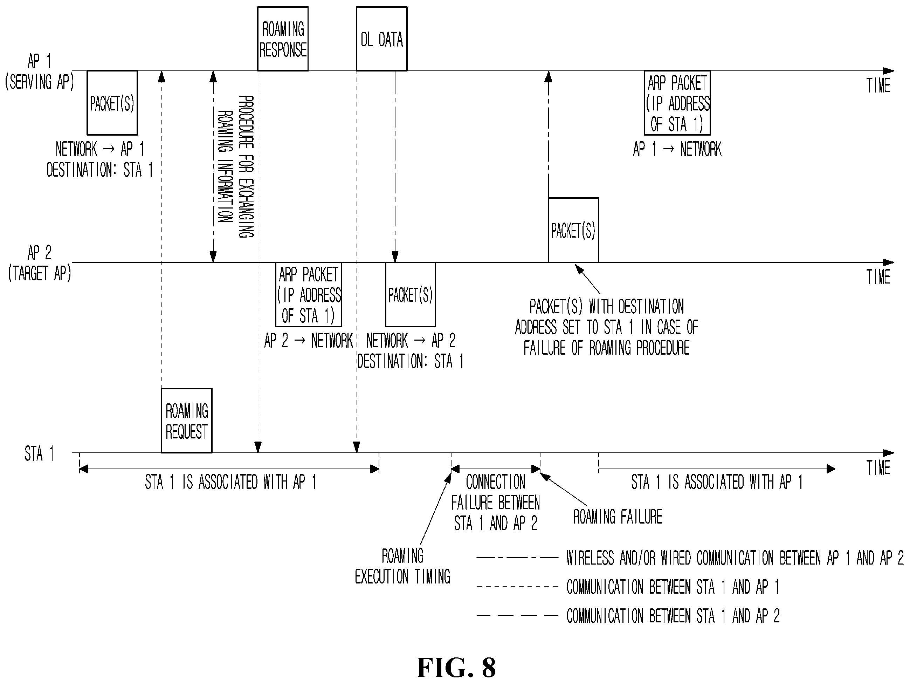

FIG. 8 is a timing diagram illustrating ARP methods in a roaming procedure.

Referring to FIG. 8, AP 1, AP 2 and/or STA 1 may operate in a WLAN. AP 1 may mean AP MLD 1, and an operation of the AP 1 may be interpreted as an operation of AP MLD 1. AP 1 may be referred to as a first AP. AP 2 may mean AP MLD 2, and an operation of the AP 2 may be interpreted as an operation of AP MLD 2. AP 2 may be referred to as a second AP. STA 1 may mean STA MLD 1, and an operation of the STA 1 may be interpreted as an operation of STA MLD 1. STA 1 may be associated with (e.g., access to) AP 1 and perform communication while being associated with AP 1. STA 1 may perform a roaming procedure to communicate with AP 2. According to the roaming procedure, an AP associated with STA 1 may be changed from AP 1 to AP 2. In other words, according to the roaming procedure, a communication target of STA 1 may be changed from AP 1 to AP 2. AP 1 may mean a current AP or a serving AP. AP 2 may mean a target AP.

STA 1 may determine whether to perform the roaming procedure based on the strength (e.g., quality) of a received signal. For example, when the received signal strength of AP 1 (or the received signal strength of AP 1 + an offset (or a margin)) is lower than the received signal strength of AP 2, STA 1 may determine to perform the roaming procedure from AP 1 to AP 2. The roaming procedure may be initiated by STA 1 transmitting a link addition request (or a roaming request) for AP 2 (e.g., a target AP) to AP 1 (e.g., a serving AP). In the roaming procedure, STA 1 may perform an association procedure with AP 2 and perform communication with AP 2 after completion of the association procedure. As another method, in the roaming procedure, STA 1 may perform communication with AP 2 without performing an association procedure with AP 2.

When STA 1 determines to perform the roaming procedure, STA 1 may transmit a roaming request frame to AP 1. The roaming request frame may include at least one of an expected time during which the roaming procedure is performed (e.g., a time during which STA 1 is capable of communicating with AP 2), a target AP (e.g., AP 2) to which STA 1 intends to be connected, a list of target APs (e.g., a list of target APs including AP 2) to which STA 1 intends to be connected, an IP address of STA 1, subnet information of STA 1, a MAC address of STA 1, an AID of STA 1, or capability information of STA 1. The roaming request frame may request performance of the roaming procedure from the serving AP (e.g., AP 1) to the target AP (e.g., AP 2). A subnet may refer to a DS.

AP 1 may receive the roaming request frame from STA 1 and perform a procedure for exchanging roaming information with AP 2 based on information included in the roaming request frame. AP 1 may identify the target AP (e.g., AP 2) based on the information included in the roaming request frame. In the procedure for exchanging roaming information, the information included in the roaming request frame transmitted by STA 1 may be exchanged between AP 1 and AP 2. In the procedure for exchanging roaming information, not only the information included in the roaming request frame transmitted by STA 1 but also information about STA 1 known by AP 1 (e.g., the IP address of STA 1, the subnet information of STA 1, the IP re-allocation indicator, the received signal strength of STA 1, the MAC address of STA 1, and/or the capability information of STA 1) may be delivered to AP 2. In addition, in the procedure for exchanging roaming information, information included in a roaming response frame transmitted by AP 1 to STA 1 may be exchanged between AP 1 and AP 2. In the procedure for exchanging roaming information, AP 2 may obtain the roaming information from AP 1. AP 2 may accept or reject the roaming procedure based on the roaming information. In other words, AP 2 may transmit information indicating acceptance or rejection of the roaming procedure to AP 1. The roaming information may be directly delivered through a wired network (e.g., an Ethernet network) between AP 1 and AP 2. Alternatively, the roaming information may be delivered through a specific network terminal (e.g., a management entity of AP 1 and AP 2). As another method, the procedure for exchanging roaming information may be performed through a wireless network (e.g., a WLAN frame exchange) of AP 1 and AP 2.

After the procedure for exchanging roaming information is completed, AP 1 may transmit a roaming response frame to STA 1. The roaming response frame may include at least one of information indicating whether AP 2 accepts the roaming procedure (e.g., roaming acceptance or roaming rejection), information on a time point at which STA 1 performs the roaming procedure (e.g., a roaming execution timing), capability information of AP 2, an IP address of AP 2, subnet information of AP 2, a MAC address of AP 2, an operating frequency (e.g., an operating channel) of AP 2, the IP re-allocation indicator, or a neighbor report (e.g., RNR) including information of AP 2. The IP re-allocation indicator may be included in the neighbor report including the information of AP 2. The neighbor report may be replaced by a multi-link element. When the neighbor report is replaced by the multi-link element, the IP re-allocation indicator may be included in the multi-link element. Alternatively, both the multi-link element and the neighbor report may be included in the roaming response frame.

As another method, AP 1 may perform the procedure for exchanging roaming information with AP 2 without receiving the roaming request frame of STA 1. After the procedure for exchanging roaming information is completed, AP 1 may transmit a roaming response frame to STA 1. In other words, AP 1 may transmit an unsolicited roaming response frame to STA 1. The unsolicited roaming response frame may be configured in the same or a similar manner as a solicited roaming response frame caused by a request (e.g., a roaming request frame) of STA 1.

In the same or a similar manner as the above-described embodiments of FIGS. 5 to 7, AP 2 may transmit an ARP packet (e.g., an ARP request packet, an ARP frame, or an ARP request frame) to a network (e.g., a wired Ethernet network, a DS) to receive a packet to be delivered to STA 1 from the network. The ARP frame may include the IP address of STA 1. After AP 2 transmits the ARP packet to the network, AP 2 may receive packet(s) of which a destination address is set to STA 1 from the network. AP 2 may store the packet(s) for transmission. At a roaming execution timing of STA 1, a roaming procedure of STA 1 may fail. For example, STA 1 may fail to be associated to AP 2 within a preset time (e.g., within a preset time from the roaming execution timing). In other words, STA 1 may fail to perform communication with AP 2 within a preset time (e.g., within a preset time from the roaming execution timing). Alternatively, when AP 2 rejects association (e.g., access, roaming) of STA 1, the roaming procedure of STA 1 may fail. Failure of the roaming procedure of STA 1 may mean failure of an association procedure (e.g., a setup procedure) between STA 1 and AP 2.

When the roaming procedure of STA 1 fails, STA 1 may perform communication with AP 1 again. When the roaming procedure of STA 1 fails, AP 2 may transmit information indicating the failure of the roaming procedure to AP 1. AP 2 may transmit packet(s), of which a destination address is set to STA 1, among packets received from a network to AP 1. AP 1 may transmit an ARP packet (e.g., an ARP frame) to the network (e.g., a wired Ethernet network, a DS) to receive a packet to be delivered to STA 1 from the network. The ARP frame may include the IP address of STA 1. After AP 1 transmits the ARP packet to the network, AP 1 may receive packet(s) of which a destination address is set to STA 1 from the network. AP 1 may store the packet(s) for transmission. The ARP packet transmitted by AP 1 to the network may include a destination MAC address, a source MAC address, and a body (e.g., a body of the Ethernet frame). The body of the Ethernet frame may have a structure as shown in Table 1 above. The structure of the ARP packet may vary according to a hierarchical structure of the network used.

Referring to FIG. 8 and Table 1, a hardware type and a protocol type may vary according to a hardware type and a communication protocol type of AP 1. For example, the hardware type may be Ethernet, and the protocol type may be IPv4 or IPv6. A hardware length (e.g., a hardware length field) may indicate a length of a hardware address (e.g., a MAC address) of hardware indicated by the hardware type. The hardware length may be indicated in units of bytes. When the hardware address is a MAC address, the length of the MAC address is 48 bits, and thus the hardware length (e.g., the hardware length field) may indicate 6. A protocol length (e.g., a protocol length field) may indicate a length of a protocol address (e.g., an IP address) of a communication protocol indicated by the protocol type. The protocol length may be indicated in units of bytes. When the protocol address is an IPv4 address, the length of the IPv4 address is 32 bits, and thus the protocol length (e.g., the protocol length field) may indicate 4.

An operation code may indicate what operation an ARP packet indicates. In the ARP packet transmitted by AP 1, the operation code may be set to 2. The operation code set to 2 may indicate an ARP response. A sender hardware address may indicate a MAC address of STA 1. A sender protocol address may indicate an IP address of STA 1. A target hardware address may be set to FF:FF:FF:FF:FF:FF, which is a broadcast MAC address. A target protocol address may indicate the IP address of STA 1. AP 1 may transmit the ARP packet instead of STA 1. The ARP packet may be transmitted without a separate request in a network.

In the embodiment of FIG. 8, AP 1 may receive packet(s), of which a destination address is set to STA 1, from the network after transmitting the ARP packet. AP 1 may transmit a downlink frame generated based on the packet(s) received from the network to STA 1. STA 1 may receive the downlink frame from AP 1.

The above-described transmission/reception procedure for ARP packets may be performed for DS mapping. A DS mapping procedure (e.g., a DS mapping change procedure) may mean a packet path change procedure (e.g., a path switching procedure). According to the DS mapping procedure, a packet path may be changed from 'STA 1 - serving AP (e.g., AP 1) - first DS (e.g., a DS to which the serving AP belongs)' to 'STA 1 - target AP (e.g., AP 2) - second DS (e.g., a DS to which the target AP belongs)'. In other words, according to the DS mapping procedure, a DS to which STA 1 is mapped may be changed from the first DS to which the serving AP belongs to the first DS to which the target AP belongs. The DS mapping procedure may be performed for a roaming procedure for STA 1. When the first DS to which the serving AP (e.g., AP 1) belongs and the second DS to which the target AP (e.g., AP 2) belongs are different, the DS mapping procedure may be performed. An ARP packet (e.g., an ARP frame) may be a request frame requesting initiation of the DS mapping procedure. For example, the ARP packet may be a DS mapping request frame. At least one of the serving AP or the target AP may transmit a DS mapping request frame to initiate the DS mapping procedure.

For example, the serving AP may transmit a DS mapping request frame to the first DS (e.g., an entity within the first DS) to which the serving AP belongs. The DS mapping request frame transmitted by the serving AP may include information of the target AP (e.g., address information, capability information, and/or context information), information of STA 1 (e.g., address information, capability information, and/or context information), and/or information of the second DS to which the target AP belongs. The first DS may receive the DS mapping request frame from the serving AP and perform DS mapping (e.g., DS change, path change, path switching) based on the DS mapping request frame. When the DS mapping is completed, the first DS may transmit a DS mapping response frame (e.g., an ARP response frame) indicating the completion of the DS mapping procedure to the serving AP. The serving AP may receive the DS mapping response frame from the first DS and determine that the DS mapping procedure is completed based on the DS mapping response frame. The serving AP may notify the target AP that the DS mapping procedure is completed. When the DS mapping procedure is completed, a packet may be transmitted and received through a path of 'STA 1 - target AP (e.g., AP 2) - second DS (e.g., a DS to which the target AP belongs)'.

As another example, the target AP may transmit a DS mapping request frame to the second DS (e.g., an entity within the second DS) to which the target AP belongs. The DS mapping request frame transmitted by the target AP may include information of the serving AP (e.g., address information, capability information, and/or context information), information of STA 1 (e.g., address information, capability information, and/or context information), and/or information of the first DS to which the serving AP belongs. The second DS may receive the DS mapping request frame from the target AP and perform DS mapping (e.g., DS change, path change, path switching) based on the DS mapping request frame. When the DS mapping is completed, the second DS may transmit a DS mapping response frame indicating the completion of the DS mapping procedure to the target AP. The target AP may receive the DS mapping response frame from the second DS and determine that the DS mapping procedure is completed based on the DS mapping response frame. The target AP may notify the serving AP that the DS mapping procedure is completed. When the DS mapping procedure is completed, a packet may be transmitted and received through a path of 'STA 1 - target AP (e.g., AP 2) - second DS (e.g., a DS to which the target AP belongs)'.

A combination of the embodiment of FIG. 8 and the embodiment of FIG. 3 or FIG. 4 may be used. For example, the IP address re-allocation procedure of STA 1 may be applied to the embodiment of FIG. 8. When the IP address re-allocation procedure of STA 1 is completed, a transmission/reception procedure of a data frame between STA 1 and AP 2 may be performed.

The operations of the method according to the embodiments of the present disclosure may be implemented as a computer readable program or code in a computer readable recording medium. The computer-readable recording medium includes every kind of recording device in which information readable by a computer system is stored. In addition, the computer-readable recording medium may be distributed over computer systems connected through a network so that computer-readable programs or codes are stored and executed in a distributed manner.

In addition, the computer-readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In embodiments, a programmable logic device (e.g., a field-programmable gate array) may be used to perform some or all of functions of the methods described herein. In embodiments, the field-programmable gate array may be operated with a microprocessor to perform one of the methods described herein. In general, the methods are preferably performed by a certain hardware device.

While the present disclosure has been described above with reference to preferred embodiments of the present disclosure, those skilled in the art will understand that various modifications and variations may be made to the present disclosure without departing from the scope and spirit of the present disclosure, which are defined by the Claims appended hereto.

## Claims

1. A method of a first access point (AP), the method comprising:
transmitting a distributed system (DS) mapping request frame to a first DS to which the first AP belongs for a roaming procedure for a station (STA); and
receiving a DS mapping response frame indicating completion of a DS mapping procedure from the first DS,
wherein based on completion of the DS mapping procedure, a DS to which the STA is mapped is changed from the first DS to a second DS to which a second AP belongs, the first AP is a serving AP, and the second AP is a target AP.

2. The method of claim 1, wherein based on the completion of the DS mapping procedure, a transmission path of a packet for the STA is changed from a path from the STA to the first AP to the first DS to a path from the STA to the second AP to the second DS.

3. The method of claim 1, further comprising transmitting information indicating completion of the DS mapping procedure to the second AP.

4. The method of claim 1, wherein the DS mapping procedure is performed based on the first DS to which the first AP belongs being different from the second DS to which the second AP belongs.

5. The method of claim 1, wherein the DS request frame includes at least one of information on the second AP, information on the second DS, or information on the STA.

6. The method of claim 1, wherein the DS mapping request frame is an address resolution protocol (ARP) request frame, and the DS mapping response frame is an ARP response frame.

7. The method of claim 1, further comprising:
receiving a roaming request frame from the STA connected to the first AP; and
transmitting a roaming response frame to the STA as a response to the roaming request frame.

8. The method of claim 7, further comprising performing a procedure of exchanging roaming information with the second AP based on receiving the roaming request frame.

9. The method of claim 7, wherein the roaming response frame includes information indicating that the second AP accepts the roaming procedure.

10. The method of claim 1, wherein the STA is an STA affiliated with a STA multi-link device (MLD), the first AP is an AP affiliated with a first AP MLD, and the second AP is an AP affiliated with a second AP MLD.

11. A method of a second access point (AP), the method comprising:
transmitting a distributed system (DS) mapping request frame to a second DS to which the second AP belongs for a roaming procedure for a station (STA); and
receiving a DS mapping response frame indicating completion of a DS mapping procedure from the second DS,
wherein based on completion of the DS mapping procedure, a DS to which the STA is mapped is changed from a first DS to which a first AP belongs to the second DS, the first AP is a serving AP, and the second AP is a target AP.

12. The method of claim 11, wherein based on the completion of the DS mapping procedure, a transmission path of a packet for the STA is changed from a path from the STA to the first AP to the first DS to a path from the STA to the second AP to the second DS.

13. The method of claim 11, further comprising transmitting information indicating completion of the DS mapping procedure to the first AP.

14. The method of claim 11, wherein the DS mapping procedure is performed based on the first DS to which the first AP belongs being different from the second DS to which the second AP belongs.

15. The method of claim 11, wherein the DS request frame includes at least one of information on the first AP, information on the first DS, or information on the STA.

16. The method of claim 11, wherein the DS mapping request frame is an address resolution protocol (ARP) request frame, and the DS mapping response frame is an ARP response frame.

17. The method of claim 11, further comprising performing a procedure of exchanging roaming information with the first AP based on the STA requesting initiation of the roaming procedure.

18. The method of claim 17, further comprising performing an association procedure between the second AP and the STA based on the second AP accepting the roaming procedure of the STA.

19. The method of claim 18, wherein the performing of the association procedure between the second AP and the STA comprises:
receiving a setup request frame from the STA; and
transmitting a setup response frame to the STA as a response to the setup request frame.

20. The method of claim 11, wherein the STA is an STA affiliated with a STA multi-link device (MLD), the first AP is an AP affiliated with a first AP MLD, and the second AP is an AP affiliated with a second AP MLD.
